# EUROPÄISCHE PATENTSCHRIFT

(11) **EP 3 340 765 B1**
(45) Veröffentlichungstag und Bekanntmachung des Hinweises auf die Patenterteilung: **15.04.2020**
(21) Anmeldenummer: 16760403.2
(22) Anmeldetag: 18.08.2016
(51) Int. Cl.: A01C 7/04

(54) **DOSIERVORRICHTUNG FÜR GRANULARES MATERIAL MIT SAMMELBEHÄLTER**
DOSING DEVICE FOR GRANULAR MATERIAL WITH COLLECTING BIN
DISPOSITIF DE DOSAGE POUR MATÉRIEL GRANULAIRE AVEC RÉSERVOIR COLLECTEUR

(30) Priorität: 26.08.2015 DE 102015114150
(43) Veröffentlichungstag der Anmeldung: 04.07.2018
(73) Patentinhaber: Amazonen-Werke H. Dreyer GmbH & Co. KG, 49205 Hasbergen (DE)
(72) Erfinder: JOHANNABER, Stefan Jan, 49536 Lienen (DE); TECKEMEYER, Stephan, 49504 Lotte (DE); FLUCKE, Jan, 27798 Hude (DE)
(86) Internationale Anmeldenummer: PCT/EP2016/069632
(87) Internationale Veröffentlichungsnummer: WO 2017/032691

(56) Entgegenhaltungen:
- WO-A1-2005/011358
- WO-A1-2015/035161
- DE-A1- 3 633 955
- DE-A1-102012 105 048
- DE-U1- 29 623 398

## Beschreibung

Die Erfindung betrifft eine Dosiervorrichtung für granulares Material, insbesondere für Saatgut.

Derartige Vorrichtungen finden in landwirtschaftlichen Sämaschinen Anwendung, um Saatgut in definierten Mengen an Abgabeelemente weiterzuleiten und dann auf einer landwirtschaftlichen Fläche abzulegen. Für bestimmtes Saatgut, beispielsweise Mais, ist es wünschenswert, einzelne Körner in vorherbestimmten Abständen abzulegen. Um das Saatgut zu vereinzeln, verwenden bekannte Dosiereinrichtungen eine mit einer Druckdifferenz beaufschlagbare Vereinzelungstrommel oder Vereinzelungsscheibe. Die Vereinzelungstrommel oder Vereinzelungsscheibe umfasst in Perforationsreihen angeordnete Perforationen, an denen sich das Saatgut anlagern kann, wodurch es zu einer Vereinzelung kommt.

Diese Vereinzelungstechnik ist jedoch nicht zufriedenstellend für Getreide, wie etwa Weizen, Roggen, Gerste, Hafer oder Raps anwendbar. Eine speziell auf einen derartigen Einsatz gerichtete Dosiervorrichtung ist daher aus der DE 10 2012 105 048 A1 bekannt geworden. Diese Dosiervorrichtung umfasst eine in einem Gehäuse konzentrisch rotierende Fördereinrichtung, die annähernd tangential an eine Innenmantelfläche des Gehäuses anschließt. In der Fördereinrichtung sind Taschen gebildet, in denen Körner des Saatguts gedrängt und kreisförmig befördert werden, bis in einem weiteren Gehäusebereich durch eine veränderte Kontur der Innenmantelfläche des Gehäuses und unter Zentrifugalkrafteinflüssen nur jeweils ein einzelnes Korn in der Tasche verbleibt, während überschüssige Körner abgesondert und zur erneuten Förderung in einen ersten Gehäusebereich zurückgeführt werden.

Um das granulare Material in die Dosiervorrichtung einzubringen, verwenden die bekannten Systeme üblicherweise einen Zentraldosierer in Verbindung mit einem Verteilerkopf. Vom Verteilerkopf ausgehend führt eine Verbindungsleitung zum Gehäuse der Dosiervorrichtung.

Im Gehäuse stehen somit einerseits die zur erneuten Förderung in den ersten Gehäusebereich zurückgeführten Körner, als auch die über die Verbindungsleitung neu eingebrachten Körner für die Dosierung bereit. Eine wenigstens teilweise bedarfsgerechte Zuführung von granularem Material an die Dosiervorrichtung ist mit derartigen Systemen nicht möglich.

Obwohl also beispielsweise zur erneuten Förderung in den ersten Gehäusebereich zurückgeführte Körner zur Verfügung stehen, wird weiteres granulares Material von außen zugeführt. Dies kann dazu führen, dass ein Körnerpuffer im ersten Gehäusebereich zu groß wird, was sich wiederum negativ auf die Dosierqualität, insbesondere auf die Vereinzelungsqualität, auswirken kann.

Aufgabe der Erfindung ist es daher, eine Dosiervorrichtung für granulares Material, insbesondere Saatgut, bereitzustellen, welche eine verbesserte Dosierqualität, insbesondere Vereinzelungsqualität, ermöglicht.

Diese Aufgabe wird durch eine Vorrichtung gemäß Patentanspruch 1 gelöst. Weitere vorteilhafte Ausgestaltungen der Erfindung sind in den abhängigen Ansprüchen angegeben.

Gemäß der Erfindung ist es also vorgesehen, dass das Gehäuse mit einem Sammelbehälter zum Bereitstellen von granularem Material verbunden ist und eine Rückleitung vom Gehäuse in den Sammelbehälter führt. Dadurch kann gewissermaßen ein Reservoir an granularem Material für die Fördereinrichtung im Sammelbehälter bereitgestellt werden, von wo aus es an die Fördereinrichtung geleitet werden kann. Da eine Rückleitung vom Gehäuse in den Sammelbehälter führt, können ausgesonderte Körner des granularen Materials aus dem Gehäuse der Fördereinrichtung ausgebracht und in den Sammelbehälter gefördert werden. Diese ausgesonderten Körner tragen also nicht zu einer unnötigen Vergrößerung des Puffers im Gehäuse bei, so dass die Dosierqualität, insbesondere die Vereinzelungsqualität, verbessert werden kann.

Bei dem granularen Material kann es sich insbesondere um Saatgut handeln, alternativ oder zusätzlich jedoch auch um granulares Düngemittel oder granulares Pestizid. Das Saatgut kann insbesondere Saatgut für Getreide, wie etwa Weizen, Roggen, Gerste, Hafer oder Raps, sein.

Die Rückleitung kann so vom Gehäuse in den Sammelbehälter führen, dass granulares Material vom Inneren des Gehäuses über die Rückleitung in den Sammelbehälter förderbar ist.

Der Sammelbehälter ist über eine Einlassöffnung mit granularem Material befüllbar, insbesondere über ein Nachfüllsystem, etwa ein Nursingsystem.

Der Sammelbehälter kann so ausgebildet sein, dass über die Rückleitung eingebrachtes granulares Material bevorzugt gegenüber granularem Material, das über die Einlassöffnung zugeführt wird, aus dem Sammelbehälter ausbringbar ist. Dadurch kann erreicht werden, dass zunächst die während der Dosierung ausgesonderten Körner des granularen Materials Verwendung finden. Die Zuführung von granularem Material über ein Nachfüllsystem kann dann bedarfsgerecht gesteuert oder geregelt werden.

Der Sammelbehälter kann insbesondere eine Auslauf- oder Ausbringöffnung aufweisen, über die granulares Material aus dem Sammelbehälter ausbringbar ist, wobei eine Mündung der Rückleitung in den Sammelbehälter oberhalb der Auslauf- oder Ausbringöffnung angeordnet ist und diese vollständig oder teilweise überlappt. Dadurch kann eine Bevorzugung des über die Rückleitung eingebrachten Materials erreicht werden. Die Angabe "oberhalb" bezieht sich hier insbesondere auf die Position beim Betrieb der Dosiervorrichtung.

Der Sammelbehälter kann ein trichterförmiges Element umfassen, wobei das trichterförmige Element eine Zufuhröffnung und eine Auslauföffnung umfasst, und wobei eine Mündung der Rückleitung in den Sammelbehälter konzentrisch zur Auslauföffnung des trichterförmigen Elements angeordnet ist. Die Auslauföffnung des trichterförmigen Elements kann der oben genannten Ausbringöffnung entsprechen oder mit dieser verbunden sein.

Diese Ausführungsform nützt die Erkenntnis aus, dass granulares Material aus einem trichterförmigen Behälter zunächst aus einem zentralen Bereich entlang der Symmetrieachse ausläuft. Erst wenn die Stützwirkung durch die zentral auslaufenden Körner nachlässt, laufen Körner aus den Außenbereichen nach. Dadurch, dass eine Mündung der Rückleitung in den Sammelbehälter konzentrisch zu einer Auslauföffnung des trichterförmigen Elements angeordnet ist, ist es daher möglich, dass zunächst die aus dem Gehäuse stammenden Körner des granularen Materials über die Rückleitung und die Auslauföffnung wieder in das Gehäuse verbracht werden, und dort erneut für die Fördereinrichtung bereitstehen. Erst wenn der über die Rückleitung führende Strom von granularem Material nachlässt, folgen Körner aus dem im Sammelbehälter angeordneten Körnerpuffer.

Durch die genannten Maßnahmen ist es also möglich, granulares Material bedarfsgerecht der Fördereinrichtung zuzuführen. Dadurch kann die Qualität der Dosierung, insbesondere der Vereinzelung, erhöht werden.

Unter einem "trichterförmigen Element" kann hierin insbesondere ein Element verstanden werden, bei dem die Auslauföffnung über eine sich, insbesondere konisch, erweiternde Wandung mit der Zufuhröffnung verbunden ist. Das trichterförmige Element kann insbesondere so ausgebildet sein, dass die Zufuhröffnung größer ausgebildet ist als die Auslauföffnung, die Zuführöffnung insbesondere also einen größeren Durchmesser aufweist, als die Auslauföffnung.

Das trichterförmige Element kann insbesondere in Bezug auf eine Längs- oder Symmetrieachse rotationssymmetrisch ausgebildet sein.

Unter der Angabe "konzentrisch" kann hierin insbesondere verstanden werden, dass der Mittelpunkt oder Schwerpunkt der Mündung der Rückleitung gleich dem Mittelpunkt oder Schwerpunkt der Auslauföffnung ist, wenn die Mündung und die Auslauföffnung in eine gemeinsame Ebene projiziert werden. Die gemeinsame Ebene kann insbesondere senkrecht zur Längs- oder Symmetrieachse des trichterförmigen Elementes liegen.

Mit anderen Worten kann unter der Angabe "konzentrisch" verstanden werden, dass der Mittelpunkt oder Schwerpunkt der Mündung der Rückleitung und der Mittelpunkt oder Schwerpunkt der Auslauföffnung beide auf der Längs- oder Symmetrieachse des trichterförmigen Elementes liegen.

Die Mündung der Rückleitung kann in einer Ebene mit der Zufuhröffnung liegen. Die Mündung der Rückleitung kann im Betrieb der Dosiervorrichtung insbesondere oberhalb der Auslauföffnung angeordnet sein.

Die Mündung der Rückleitung kann insbesondere im Inneren des Sammelbehälters angeordnet sein. Insbesondere kann also die Rückleitung selbst teilweise im Inneren des Sammelbehälters angeordnet sein. Ein Abschnitt des Teils der Rückleitung, der im Sammelbehälter angeordnet ist, kann koaxial zur Längsachse oder Symmetrieachse des trichterförmigen Elements angeordnet sein.

Das trichterförmige Element kann insbesondere durch einen Wandabschnitt des Sammelbehälters gebildet werden. Mit anderen Worten kann der Sammelbehälter selbst wenigstens abschnittsweise trichterförmig ausgebildet sein.

Der Sammelbehälter weist eine oben erwähnte Einlassöffnung auf, über die granulares Material in den Sammelbehälter eingebracht werden kann. Die Einlassöffnung kann im Betrieb insbesondere oberhalb der Zufuhröffnung und der Auslauföffnung des trichterförmigen Elements angeordnet sein. Dadurch kann granulares Material unter Schwerkraftwirkung über die Zuführöffnung in das trichterförmige Element gelangen.

Die Zufuhröffnung kann ringförmig ausgebildet sein und insbesondere die Mündung der Rückleitung umgeben. Dadurch befinden sich die von außen zugeführten Körner bei einem größeren radialen Abstand im trichterförmigen Element, als die Körner, welche über die Rückleitung vom Gehäuse in das trichterförmige Element eingebracht werden. Die über die Rückleitung eingebrachten Körner können daher bevorzugt über die Auslauföffnung ausgebracht werden.

Über die Einlassöffnung kann der Sammelbehälter mit einem Nachfüllsystem verbunden sein, insbesondere einem Nursingsystem. Das Nursingsystem kann einen zentralen Vorratsbehälter für granulares Material umfassen, wobei der zentrale Vorratsbehälter über einen pneumatischen Förderkanal mit der Einlassöffnung des Sammelbehälters verbunden ist. Das Nursingsystem kann außerdem ein Gebläse umfassen, mit dem ein Förderluftstrom im pneumatischen Förderkanal erzeugbar ist.

Alternativ kann die Einlassöffnung des Sammelbehälters auch mit einem Verteilerkopf verbunden sein.

Das granulare Material ist erfindungsgemäß über die Auslauf- oder Ausbringöffnung unmittelbar oder über eine Verbindungsleitung in eine Vordosiereinheit einbringbar, wobei die Vordosiereinheit so ausgebildet ist, dass sie granulares Material über eine Zuführöffnung in das Gehäuse fördert. Die Zuführöffnung kann insbesondere in einer Wandung des Gehäuses angeordnet sein.

Die an die Auslauföffnung optional anschließende Verbindungsleitung kann einen Trichterhals zum trichterförmigen Element bilden. Der Trichterhals kann zylindrisch, insbesondere kreiszylindrisch, ausgebildet sein. Es ist jedoch auch möglich, dass auch die Seitenwandung des Trichterhalses beispielsweise konisch ausgebildet ist.

Die Vordosiereinheit umfasst erfindungsgemäß einen Rotor, dessen Drehachse koaxial zur Drehachse der Fördereinrichtung verläuft. Der Rotor kann mit Förderelementen verbunden sein, welche das granulare Material in das Gehäuse der Dosiervorrichtung fördern.

Das granulare Material kann unter Schwerkraftwirkung vom Sammelbehälter in die Vordosiereinheit förderbar sein. Dafür kann die Auslauföffnung des trichterförmigen Elements im Betrieb insbesondere oberhalb der Vordosiereinheit angeordnet sein. Auf diese Weise ist eine besonders einfache Förderung des granularen Materials möglich.

Der Durchmesser der Mündung der Rückleitung kann größer als oder gleich groß wie der Durchmesser der Auslauföffnung sein. Dadurch kann in besonderem Maße erreicht werden, dass über die Rückleitung in den Sammelbehälter eingebrachtes Material bevorzugt über die Auslauföffnung ausgeschleust wird. Erst wenn die Rückführung von granularem Material über die Rückleitung verringert wird oder abbricht, wird granulares Material über die Auslauföffnung ausgebracht, welches über das Nachfüllsystem neu in den Sammelbehälter eingebracht wurde, sich zuvor also noch nicht im Gehäuse der Dosiervorrichtung befand.

Alternativ zur beschriebenen Ausführungsform, bei der der Sammelbehälter ein trichterförmiges Element umfasst, kann der Boden des Sammelbehälters eine zur Ausbringöffnung führende Ebene enthalten, welche in einer besonders vorteilhaften Ausführungsform als schiefe Ebene ausgebildet ist, wobei die Einlassöffnung oberhalb der Ebene angeordnet ist. Der Boden kann auch wenigstens teilweise in Form einer schiefen Ebene ausgebildet sein. Die Angabe "oberhalb" bezieht sich hier wiederum auf die Position beim Betrieb der Dosiervorrichtung.

Durch diese Maßnahme gelangt das über ein Nachfüllsystem in den Sammelbehälter eingebrachte granulare Material zunächst auf die schiefe Ebene, von wo aus es zur Ausbringöffnung rutschen kann. Solange ein Körnerstrom über die Rückleitung in den Sammelbehälter und zur Ausbringöffnung führt, kann dieser Körnerstrom ein Nachrutschen von Körnern auf der schiefen Ebene verhindern oder verringern. Erst wenn dieser Körnerstrom nachlässt, können Körner von der schiefen Ebene in die Ausbringöffnung gelangen.

Der Winkel, mit dem die schiefe Ebene gegen die Horizontale geneigt ist, kann zwischen 10° und 45° betragen.

Die schiefe Ebene kann insbesondere unmittelbar an die Ausbringöffnung angrenzen.

Bei dieser Ausführungsform kann die Mündung der Rückleitung in den Sammelbehälter, wie oben ausgeführt, insbesondere oberhalb der Ausbringöffnung angeordnet sein und diese vollständig oder teilweise überlappen. Die Ausdehnung der Mündung der Rückleitung kann insbesondere größer sein als die Ausdehnung der Ausbringöffnung. Unter der "Ausdehnung" kann insbesondere die maximale oder mittlere Erstreckung der Mündung bzw. der Ausbringöffnung oder deren Durchmesser verstanden werden.

Es ist auch denkbar, dass die Ausbringöffnung nicht am Boden des Sammelbehälters, sondern in einer Seitenwand des Sammelbehälters angeordnet ist. In diesem Fall überlappt die Mündung der Rückleitung nicht notwendigerweise die Ausbringöffnung.

Der Sammelbehälter kann durch eine Trennwand in zwei Teilkammern unterteilt sein, wobei die Einlassöffnung in eine erste Teilkammer und die Mündung der Rückleitung in eine zweite Teilkammer mündet. Die erste und die zweite Teilkammer können über einen Durchlass verbunden sein. Der Durchlass kann insbesondere dadurch gebildet werden, dass die Trennwand vom Boden des Sammelbehälters beabstandet ist. Auch eine Durchlassöffnung in der Trennwand wäre aber denkbar.

Die Trennwand kann dabei eine ebene Wandung sein, wobei die beiden Teilkammern an gegenüberliegenden Seiten der Trennwand angeordnet sind. Die Trennwand kann jedoch auch eine komplexere Geometrie aufweisen. Beispielsweise kann die Trennwand gekrümmt ausgebildet sein und/oder Teil der Außenwandung des Sammelbehälters sein. Beispielsweise kann die erste Teilkammer gewissermaßen eine Verlängerung der Förderleitung sein, die als Teil des Nachfüllsystems zur Einlassöffnung führt. Die zweite Teilkammer kann entsprechend eine Verlängerung der Rückleitung sein, die vom Gehäuse zur oben genannten Mündung der Rückleitung führt.

Die Ausbringöffnung kann insbesondere in der zweiten Teilkammer angeordnet sein, insbesondere vollständig.

Die Zuführung von über die Einlassöffnung eingebrachtem granularem Material zur Ausbringöffnung kann mittels eines Verschlussschiebers (Stellschiebers) einstellbar sein.

Insbesondere kann die Größe des Durchlasses zwischen den beiden Teilkammern über einen Verschlussschieber einstellbar sein. Der Verschlussschieber kann insbesondere manuell betätigbar sein. Dafür kann ein Betätigungselement durch die Wandung des Sammelbehälters nach außen geführt sein, sodass das Betätigungselement von außen bedient werden kann. Insbesondere kann das Betätigungselement insbesondere starr mit dem Verschlussschieber gekoppelt sein, sodass eine Bewegung des Betätigungselements auf den Verschlussschieber übertragbar ist. In der Wandung des Sammelbehälters kann eine Durchgangsöffnung, insbesondere ein Langloch, vorgesehen sein, in der das Betätigungselement geführt bewegt werden kann.

Durch diese Einstellbarkeit kann der an der Ausbringöffnung anstehende Pegel granularen Materials beeinflusst oder gesteuert werden. Insbesondere kann dadurch der Fließfähigkeit des granularen Materials Rechnung getragen werden. Beispielsweise kann bei schlechter Fließfähigkeit (beispielsweise bei gebeizter Gerste) der Verschlussschieber weit geöffnet werden, gegebenenfalls vollständig, während bei sehr guter Fließfähigkeit (beispielsweise bei Raps) eine geringe Öffnung eingestellt wird. Dadurch wird verhindert, dass bei schlechter Fließfähigkeit ein zu niedriger Pegel vorliegt, was zu Fehlstellen führen könnte, bzw. dass bei guter Fließfähigkeit ein zu hoher Pegel vorliegt, der zu einer erhöhten Antriebsleistung für die Dosierung führen kann.

Die Position des Verschlussschiebers kann insbesondere kontinuierlich veränderbar sein. Dadurch kann auch die Größe des Durchlasses kontinuierlich eingestellt werden. Alternativ kann die Dosiervorrichtung so ausgebildet sein, dass die Position des Verschlussschiebers nur zwischen diskreten Positionen veränderbar ist. Die diskreten Positionen können unterschiedlichen Fließfähigkeiten und damit unterschiedlichen Arten granularen Materials entsprechen. Bei einer kontinuierlichen Einstellbarkeit können entsprechende Markierungen am Sammelbehälter vorgesehen sein, die auf die optimale Position des Verschlussschiebers für gegebene granulare Materialien hinweisen.

In einem Abschnitt der Wandung des Sammelbehälters kann wenigstens eine Luftauslassöffnung angeordnet sein. Insbesondere können eine Vielzahl von Luftauslassöffnungen in Form eines Luftauslassgitters oder eines Luftauslasssiebs angeordnet sein. Der Wandungsabschnitt des Sammelbehälters mit der wenigstens einen Luftauslassöffnung kann insbesondere oberhalb des trichterförmigen Elements angeordnet sein, insbesondere unmittelbar oberhalb an das trichterförmige Element angrenzen. Der Wandungsabschnitt des Sammelbehälters mit der wenigstens einen Luftauslassöffnung kann auch in einer Seitenwand des Sammelbehälters angeordnet sein, die oberhalb der schiefen Ebene angeordnet ist, insbesondere in einer Seitenwand der ersten Teilkammer.

Über die wenigstens eine Luftauslassöffnung kann der Förderluftstrom zur Förderung von granularem Material in den Sammelbehälter beeinflusst werden. Insbesondere kann die wenigstens eine Luftauslassöffnung durch granulares Material im Sammelbehälter blockiert werden. In diesem Fall kann der Förderluftstrom derart abgeschwächt werden, dass es zu keiner Nachförderung von granularem Material zum Sammelbehälter mehr kommt. Die wenigsten eine Luftauslassöffnung kann insbesondere vorteilhaft mit einem Nursingsystem zusammenwirken. Dadurch ist insbesondere eine selbstregulierende Nachlieferung von granularem Material zum Sammelbehälter möglich.

In der Rückleitung und/oder im Sammelbehälter können ein oder mehrere Elemente vorgesehen sein, welche einen Transport von granularem Material vom Sammelbehälter über die Rückleitung in das Gehäuse verhindern oder erschweren. Dadurch kann verhindert werden, dass ungewollt granulares Material über die Rückleitung in das Gehäuse der Dosiervorrichtung eingebracht wird. Zu einem solchen ungewollten Transport über die Rückleitung kann es beispielsweise unmittelbar nach dem Einschalten des Nachfüllsystems kommen, da in diesem Fall noch kein Saatgut im Sammelbehälter vorhanden ist, welche den vom Nachfüllsystem (insbesondere Nursingsystem) stammenden Körnerstrom bremsen würde.

Die ein oder mehreren Elemente können insbesondere eine Rückschlagklappe umfassen. Mit anderen Worten kann in der Rückleitung und/oder im Sammelbehälter eine Rückschlagklappe angeordnet sein. Diese Rückschlagklappe kann so ausgebildet sein, dass sie einen Transport von granularem Material in einer Richtung (vom Gehäuse über die Rückleitung in den Sammelbehälter) erlaubt, während ein Transport in die Gegenrichtung (vom Sammelbehälter über die Rückleitung in das Gehäuse) blockiert wird.

Die Rückschlagklappe kann zwischen einer Durchlassstellung und einer Sperrstellung beweglich sein, insbesondere um eine Schwenkachse schwenkbar. In der Durchlassstellung wird ein Transport von granularem Material vom Gehäuse über die Rückleitung in den Sammelbehälter und weiter zur Ausbringöffnung ermöglicht. Durch ein erstes Anschlagelement, welches mit der Rückschlagklappe verbunden ist, kann verhindert werden, dass die Rückschlagklappe in der Durchlassstellung an einer Innenwandung der Rückleitung bzw. des Sammelbehälters anliegt. Dadurch bietet die Rückschlagklappe auch in Durchlassstellung eine Angriffsfläche für eine Strömung in Gegenrichtung.

Ein zweites Anschlagelement, welches mit der Rückschlagklappe verbunden ist, kann eine weitere Schwenkbewegung der Klappe in Gegenrichtung verhindern und die Rückschlagklappe so in der Sperrstellung fixieren.

Das erste und zweite Anschlagelement können einstückig ausgebildet sein. Es ist aber auch möglich, dass zwei separate Anschlagelemente vorgesehen sind.

Die Rückschlagklappe kann mehrteilig ausgebildet sein, beispielsweise als zweiteilige Flügelklappe.

Wenn weder in der einen Richtung noch in der Gegenrichtung eine Strömung ausgebildet ist, kann die Rückschlagklappe auch in einer Neutralstellung angeordnet sein, die zwischen der Durchlassstellung und der Sperrstellung liegt, und bei der insbesondere keines der Anschlagelemente an einer Innenwandung des Rückkanals oder des Sammelbehälters anliegt.

Die ein oder mehreren Elemente können alternativ oder zusätzlich keilförmige Leitelemente umfassen, deren Spitze in die gewünschte Transportrichtung weisen, die vom Gehäuse über die Rückleitung in den Sammelbehälter, und insbesondere weiter zur Ausbringöffnung, führt. Die Leitelemente können insbesondere kaskadenförmig angeordnet sein. Mit anderen Worten können an gegenüberliegenden Seiten der Rückleitung und/oder des Sammelbehälters jeweils mehrere Leitelemente in der gewünschten Transportrichtung hintereinander angeordnet sein. Insbesondere können die Leitelemente der gegenüberliegenden Seiten versetzt zueinander angeordnet sein.

Die Fördereinrichtung kann mit der Gehäusewandung oder dem Führungselement insbesondere so zusammenwirken, dass die Anzahl der geförderten Körner des granularen Materials vom Aufnahmebereich zum Abgabebereich hin abnimmt. Die Dosiervorrichtung kann insbesondere eine Vereinzelungsvorrichtung sein.

Die Dosiervorrichtung, insbesondere die Fördereinrichtung, kann einen Zentrierschieber umfassen, der granulares Material entlang einer Führungsfläche eines Führungselements vom Aufnahmebereich in den Abgabebereich schiebt und dabei ein Korn zentriert, indem er es beidseitig abstützt oder führt. Nicht zentrierte Körner, die im Aufnahmebereich aufgenommen und entlang der Führungsfläche transportiert werden, können infolge ausgesondert werden, sodass im Abgabebereich das zentrierte Korn verbleibt und an ein Abgabeelement zur Ablage auf einer landwirtschaftlichen Fläche weitergeleitet werden kann. Insbesondere kann genau ein Korn durch den Zentrierschieber zentriert geführt werden. Die Dosiervorrichtung kann also eine Vereinzelungsvorrichtung sein.

Ausgesonderte Körner können über die Rückleitung in den Sammelbehälter gefördert werden.

Die Angabe "beidseitig abstützt oder führt" bedeutet, dass der Zentrierschieber Elemente umfasst, welche das zentrierte Korn an beiden Seiten (auf die Drehrichtung des Zentrierschiebers bezogen) abstützen oder führen. Damit kann eine Bewegung des Korns quer zur Drehrichtung reduziert oder vermieden werden, sodass das zentrierte Korn im Wesentlichen entlang einer vorbestimmten Bewegungsbahn vom Aufnahmebereich in den Abgabebereich geschoben wird. Um das Korn seitlich zu führen ist es nicht erforderlich, dass der Zentrierschieber stets in direktem Kontakt mit dem Korn steht. Es ist ausreichend, wenn der Zentrierschieber verhindert, dass das Korn einen vorherbestimmten seitlich begrenzten Bereich verlässt.

Als Drehrichtung wird die Bewegungsrichtung bezeichnet, in der sich der Zentrierschieber im Betrieb der Dosiervorrichtung bewegt. Mit anderen Worten bezeichnet die Drehrichtung die Richtung der Vorwärtsbewegung des Zentrierschiebers. Wenn sich der Zentrierschieber entlang einer Kreisbahn bewegt, ist die Bewegungsrichtung an jedem Punkt der Kreisbahn tangential zu dieser. Die Angaben "seitlich" oder "beidseitig" beziehen sich daher auf die Bereiche quer zur Drehrichtung.

Die Angabe "wenigstens teilweise" bedeutet in diesem Zusammenhang, dass der Zentrierschieber das Korn nicht durchgehend vom Aufnahmebereich bis zum Abgabebereich beidseitig abstützen oder führen muss. Beispielsweise kann es Zeit in Anspruch nehmen, bis sich das Korn so relativ zum Zentrierschieber ausgerichtet hat, dass eine beidseitige Abstützung oder Führung möglich ist. Während dieser Zeit kann das Korn bereits einen gewissen Weg vom Aufnahmebereich zum Abgabebereich bewegt werden. Das Korn kann aber auch entlang des gesamten Wegs beidseitig abgestützt oder geführt werden.

Der Zentrierschieber kann auch ein oder mehrere Elemente umfassen, welche das zentrierte Korn in Drehrichtung gesehen nach hinten abstützen. Die Elemente, welche die seitliche Abstützung oder Führung bewirken können zugleich auch die Abstützung nach hinten gewährleisten.

Der Zentrierschieber kann so drehbar in dem Gehäuse gelagert sein, dass er entlang einer Kreisbahn bewegbar ist, wobei das Führungselement wenigstens teilweise entlang der Kreisbahn verläuft, und wobei die Breite der Führungsfläche vom Aufnahmebereich zum Abgabebereich hin abnimmt.

Durch die abnehmende Breite der Führungsfläche können die Körner, welche nicht durch den Zentrierschieber zentriert werden, im Laufe der Bewegung vom Aufnahmebereich in den Abgabebereich aufgrund der wegfallenden Stütze durch die Führungsfläche unter Zentrifugalkrafteinflüssen und/oder Schwerkrafteinflüssen ausgesondert werden. Auch die Breite des Führungselements insgesamt kann vom Aufnahmebereich zum Abgabebereich hin abnehmen.

Der Zentrierschieber kann so im Gehäuse gelagert sein, dass die Kreisbahn im Betrieb der Dosiervorrichtung im Wesentlichen vertikal verläuft. Mit anderen Worten kann die Drehachse, um die der Zentrierschieber rotiert, horizontal verlaufen, insbesondere im Betrieb parallel zum zu bearbeitenden Boden. Insbesondere kann die Drehachse mit der Horizontalen einen Winkel zwischen 0° und 10°, insbesondere zwischen 0° und 5°, einschließen.

Das Führungselement kann insbesondere radial außerhalb der Kreisbahn verlaufen. Mit anderen Worten kann das Führungselement die Kreisbahn wenigstens teilweise radial umgeben oder begrenzen. Das Führungselement kann insbesondere annähernd tangential entlang bestimmten Abschnitten der Kreisbahn verlaufen, insbesondere im Abschnitt der Kreisbahn zwischen dem Aufnahmebereich und dem Abgabebereich.

Die Kreisbahn kann insbesondere durch ein äußerstes Ende oder eine Spitze des Zentrierschiebers überstrichen werden. Mit anderen Worten kann die Kreisbahn einen Radius aufweisen, der der Länge des Zentrierschiebers entspricht. Die Länge des Zentrierschiebers kann der maximalen radialen Erstreckung des Zentrierschiebers ausgehend von der Drehachse entsprechen.

Der Aufnahmebereich kann ein bestimmtes Kreissegment der Kreisbahn des Zentrierschiebers umfassen.

Im Abgabebereich kann die Stützwirkung des Führungselementes entfallen oder der Verlauf des Führungselementes sich derart ändern, dass das wenigstens eine Korn durch Fliehkraft in die Auslassöffnung gefördert wird.

Als Führungsfläche des Führungselements wird hierin die für die Förderung des granularen Materials vom Aufnahmebereich in den Abgabebereich wirksame Fläche des Führungselements bezeichnet. Mit anderen Worten entspricht die Führungsfläche des Führungselements der Oberfläche des Führungselements, auf der Körner des granularen Materials bei der Förderung von dem Aufnahmebereich in den Abgabebereich hin bewegt werden. Aufgrund der Bewegung entlang der Kreisbahn wird das granulare Material durch Fliehkraft gegen die Führungsfläche des Führungselements gedrückt. Die Führungsfläche des Führungselements dient daher als Stütze für das granulare Material entgegen der Fliehkraft. Alternativ oder zusätzlich können die Körner auch durch die Schwerkraft gegen die Führungsfläche gedrückt werden. Dies kann insbesondere dann der Fall sein, wenn sich der Zentrierschieber gemäß einer Alternative nicht entlang einer Kreisbahn um die Drehachse bewegt, sondern entlang einer Bahn, die wenigstens teilweise parallel zur Horizontalen verläuft.

Wenn die Breite der Führungsfläche abnimmt geht diese Stützwirkung, wie oben erwähnt, für bestimmte Körner des granularen Materials verloren, weshalb diese nicht weiter zum Abgabebereich hin gefördert werden können, sondern ausgesondert werden.

Die Breite der Führungsfläche kann vom Aufnahmebereich zum Abgabebereich hin kontinuierlich abnehmen. Dadurch können überschüssige Körner sukzessive ausgesondert werden. Die Breite der Führungsfläche kann jedoch auch diskontinuierlich abnehmen.

Als Breite der Führungsfläche kann insbesondere die Ausdehnung der Führungsfläche quer zur Kreisbahn bezeichnet werden. Die Richtung quer zur Kreisbahn bezeichnet hierin eine Richtung, die an jedem Punkt der Kreisbahn senkrecht zur Tangente und senkrecht zum Radius der Kreisbahn verläuft. Die Ausdehnung der Führungsfläche in dieser Richtung wird entlang der, gegebenenfalls konturierten, Führungsfläche bestimmt.

Das Führungselement kann eine Vertiefung aufweisen, in die der Zentrierschieber wenigstens teilweise eingreift, wobei die Tiefe der Vertiefung entlang der Kreisbahn des Vereinzelungsschiebers vom Aufnahmebereich zum Abgabebereich hin abnimmt. Durch die Vertiefung im Aufnahmebereich ist es möglich, dass zuverlässig Saatgut durch den Zentrierschieber aufgenommen und entlang der Führungsfläche bewegt werden kann. Durch die abnehmende Tiefe der Vertiefung entlang der Kreisbahn kann wiederum eine Aussonderung überschüssiger Körner des granularen Materials bewirkt werden. Die Abnahme der Tiefe geht mit einer Abnahme der Breite der Führungsfläche einher.

Die Vertiefung im Führungselement kann insbesondere einer Nut oder Kerbe entsprechen. Die Nut oder Kerbe kann insbesondere V-förmig ausgebildet sein.

Das Führungselement kann im Abgabebereich einen in Drehrichtung verlaufenden Grat aufweisen. Durch einen solchen Grat wird eine Vereinzelung des granularen Materials weiter gefördert, da entlang des Grats üblicherweise nur ein Korn stabil bewegt werden kann, nämlich das Korn, welches wenigstens teilweise durch den Zentrierschieber zentriert wird. Die vorherbestimmte Bahn entlang der Führungsfläche, entlang der der Zentrierschieber ein Korn zentriert bewegt, kann insbesondere entlang des Grats verlaufen.

Beidseitig des Führungselements kann ein Sammelraum für im Laufe des Transports vom Aufnahmebereich zum Abgabebereich ausgesonderte Körner des granularen Materials angeordnet sein, der mit dem Aufnahmebereich verbunden ist. Dadurch können ausgesonderte Körner wieder für den erneuten Transport vom Aufnahmebereich in den Abgabebereich bereitgestellt werden. Der Sammelraum kann durch die Wandung des Gehäuses begrenzt werden. Der Sammelraum kann gegenüber der Führungsfläche des Führungselements radial nach außen versetzt sein. Die ausgesonderten Körner können sich im Sammelraum also auf Kreisbahnen mit größerem Radius bewegen, als das oder die Körner, die durch den Zentrierschieber entlang der Führungsfläche geschoben werden.

Insbesondere können ausgesonderte Körner des granularen Materials aber über die Rückleitung vom Sammelraum in den Sammelbehälter verbracht werden. Von dort aus können sie dann über eine Vordosiereinheit wieder in das Gehäuse eingebracht werden, und für den erneuten Transport vom Aufnahmebereich in den Abgabebereich bereitstehen. Dafür kann in der Wandung des Gehäuses eine Öffnung vorgesehen sein, über welche die Rückleitung in den Sammelraum mündet. Die Rückleitung kann insbesondere tangential in das Gehäuse einmünden.

Die ausgesonderten Körner können daher unter der Wirkung der Fliehkraft und aufgrund ihrer kinetischen Energie, welche sie durch Wechselwirkung mit dem Zentrierschieber erhalten haben, in die Rückleitung gelangen. Es ist jedoch denkbar, dass diese kinetische Energie der Körner nicht ausreicht, um sie über die Rückleitung in den Sammelbehälter zu bewegen, beispielsweise bei geringen Drehzahlen des Zentrierschiebers oder wenn ein Korn frühzeitig in der Bewegung vom Aufnahmebereich in den Abgabebereich ausgesondert wird.

Die Dosiervorrichtung kann daher wenigstens einen drehbar gelagerten Mitnehmer umfassen, durch welchen ausgesonderte Körner des granularen Materials im Sammelraum beschleunigt und in Folge durch Fliehkraft aus dem Sammelraum ausgebracht und in die Rückleitung gefördert werden können.

Insbesondere kann der wenigstens eine Mitnehmer so ausgebildet und angeordnet sein, dass er ein Korn des granularen Materials im Sammelraum in eine Rotationsbewegung um die Drehachse der Fördereinrichtung versetzen oder eine solche Rotationsbewegung verstärken kann.

Die Dosiervorrichtung kann insbesondere zwei solche drehbar gelagerten Mitnehmer umfassen, die jeweils auf einer Seite des Führungselements angeordnet sind. Auch mehr als zwei Mitnehmer sind möglich.

Der wenigstens eine Mitnehmer kann, insbesondere starr, mit der Fördereinrichtung, insbesondere einem Zentrierschieber der Fördereinrichtung, verbunden sein. Der wenigstens eine Mitnehmer kann entsprechend um die Drehachse des Zentrierschiebers drehbar sein. Damit kann der wenigstens eine Mitnehmer auch durch den Antrieb der Fördereinrichtung angetrieben werden.

Der wenigstens eine Mitnehmer kann so ausgebildet sein, dass er wenigstens teilweise entgegen der Drehrichtung ausweichen kann. Mit anderen Worten kann er also wenigstens teilweise entgegen seiner Bewegungsrichtung auslenkbar sein. Dadurch kann verhindert werden, dass Körner des granularen Materials an Scherstellen beschädigt werden. Eine solche Scherstelle kann beispielsweise an der Kante der Mündungsöffnung der Rückleitung ins Gehäuse entstehen. Der wenigstens eine Mitnehmer kann insbesondere zumindest teilweise aus einem flexiblen Material hergestellt sein, beispielsweise aus Gummi. Alternativ oder zusätzlich kann der wenigstens eine Mitnehmer ein Gelenk umfassen, dessen Gelenksachse insbesondere quer zur Drehrichtung des wenigstens einen Mitnehmers verläuft. Es wäre auch möglich, dass der wenigstens eine Mitnehmer mehrere flexible Borsten umfasst, also als Borstenbüschel ausgebildet ist.

Das Führungselement kann an einer Innenfläche des Gehäuses angeordnet sein, welche den Raum, in dem der Zentrierschieber im Betrieb rotiert, radial begrenzt. Mit anderen Worten kann das Gehäuse im Wesentlichen zylindrisch ausgebildet sein, wobei das Führungselement an der Mantelfläche des Gehäuses angeordnet ist.

Das Führungselement kann Teil der Innenfläche des Gehäuses sein. Alternativ kann das Führungselement zerstörungsfrei lösbar oder nicht zerstörungsfrei lösbar mit der Innenfläche des Gehäuses verbunden sein. Beispielsweise kann das Führungselement an das Gehäuse angeschweißt sein.

Das Führungselement und der Zentrierschieber können in einer gemeinsamen Ebene angeordnet sein, wobei das Führungselement und der Zentrierschieber bezüglich dieser Ebene symmetrisch ausgebildet sind. Die gemeinsame Ebene kann insbesondere eine Rotationsebene des Zentrierschiebers sein.

Falls das Führungselement eine Vertiefung aufweist, können die Punkte mit der größten Tiefe in der gemeinsamen Ebene liegen.

Falls das Führungselement einen Grat aufweist, kann dieser ebenfalls in der gemeinsamen Ebene liegen.

Die Dosiervorrichtung kann wenigstens einen weiteren Zentrierschieber umfassen. Dieser kann eines oder mehrere Merkmale des oben genannten Zentrierschiebers aufweisen. Insbesondere kann der wenigstens eine weitere Zentrierschieber so drehbar im Gehäuse gelagert sein, dass er entlang der Kreisbahn bewegbar ist. Mit anderen Worten kann der weitere Zentrierschieber in Umfangsrichtung versetzt zum oben beschriebenen Zentrierschieber angeordnet sein und dem oben beschriebenen Zentrierschieber nachlaufend entlang der Kreisbahn bewegbar sein.

Der Zentrierschieber und der wenigstens eine weitere Zentrierschieber können miteinander verbunden sein, insbesondere starr miteinander verbunden sein.

Der Zentrierschieber und der wenigstens eine weitere Zentrierschieber können an einer gemeinsamen rotierenden Scheibe oder einem gemeinsam rotierenden Ring angeordnet sein.

Der Zentrierschieber und der wenigstens eine weitere Zentrierschieber können ein die Zentrierwirkung des Zentrierschiebers erzeugendes Element aufweisen. Dieses Element kann insbesondere so ausgebildet sein, dass ein Korn des granularen Materials beidseitig stützbar oder führbar ist. Das Element kann nach vorne hin (in Drehrichtung) offen sein. Mit anderen Worten kann eine Abstützung des Korns nach vorne hin unterbleiben.

Der Zentrierschieber kann insbesondere eine in Drehrichtung offene Nut oder Kerbe zur Aufnahme eines Korn des granularen Materials umfassen. Die Nut oder Kerbe kann auch in Richtung der Führungsfläche offen sein. Die Größe der Nut kann so gewählt sein, dass sich maximal ein Korn ganz oder teilweise in der Nut anordnen kann.

Die Nut kann insbesondere konisch oder V-förmig ausgebildet sein. Die Nut kann insbesondere bezüglich der oben genannten gemeinsamen Ebene des Führungselements und des Zentrierschiebers symmetrisch ausgebildet sein. Eine korrespondierende Vertiefung im Führungselement kann ebenfalls symmetrisch bezüglich dieser Ebene ausgebildet sein. Diese Symmetrie erlaubt insbesondere ein beidseitiges Absondern von überschüssigen Körnern in den umgebenden Sammelraum.

In einer alternativen Ausführungsform kann der Zentrierschieber mehrere in Richtung des Führungselements weisende Borsten aufweisen. Wenn die Breite der Führungsfläche zum Abgabebereich hin abnimmt, werden äußere Borsten nicht mehr entlang der Führungsfläche bewegt und können sich infolge der Fliehkraftwirkung aufstellen. Damit können diese Borsten ein Korn des granularen Materials seitlich führen. Nachlaufende Borsten können das Korn in Drehrichtung gesehen nach hinten abstützen. Mit anderen Worten kann sich auch bei einem Borsten umfassenden Zentrierschieber eine konische oder V-förmige Zentrierfläche für ein Korn ausbilden.

Das die Zentrierwirkung des Zentrierschiebers erzeugende Element des Zentrierschiebers kann insbesondere am äußersten Ende oder an der Spitze des Zentrierschiebers angeordnet sein.

Das Zentrierelement kann austauschbar sein. Beispielsweise kann eine die oben genannte Nut des Zentrierschiebers umfassende Spitze des Zentrierschiebers auswechselbar sein. Dadurch kann eine gewisse Anpassung oder Optimierung hinsichtlich der Korngrößen erzielt werden.

Die Dosiervorrichtung kann wenigstens ein Störelement umfassen, welches so ausgebildet ist, dass Körner des granularen Materials, die nicht durch den Zentrierschieber zentriert werden unter Einfluss des Störelements ihre Lage ändern oder vom Transport zum Abgabebereich hin ausgesondert werden. Ein derartiges Störelement begünstigt die Aussonderung überschüssiger Körner und somit die Vereinzelung des granularen Materials.

Das Störelement kann beispielsweise eine Druckluftdüse umfassen.

Es kann also wenigstens eine Druckluftdüse vorgesehen und so angeordnet sein, dass Druckluft auf granulares Material gerichtet werden kann, welches durch den Zentrierschieber entlang der Führungsfläche des Führungselements geschoben wird. Diese Druckluft kann eine Störung für Körner des granularen Materials darstellen, welche nicht durch den Zentrierschieber zentriert geführt werden. Dadurch kann die Aussonderung von überschüssigen Körnern unterstützt werden. Dies kann auch eine zuverlässigere Vereinzelung des granularen Materials ermöglichen.

Die Druckluftdüse kann in das Führungselement integriert sein, und insbesondere eine Luftausströmöffnung umfassen, die in der Führungsfläche angeordnet ist. Dadurch ist eine besonders effiziente Störung überschüssiger Körner möglich.

Alternativ oder zusätzlich ist es auch denkbar, eine mit Druckluft beaufschlagbare Scheibe vorzusehen, die gemeinsam mit dem Zentrierschieber rotiert und wenigstens eine Öffnung aufweist, die im Bereich des Zentrierschiebers angeordnet ist. Diese mitlaufende Öffnung kann in Drehrichtung gesehen insbesondere stromabwärts des Zentrierschiebers angeordnet sein, also vorlaufen.

Durch die Druckluftdüse kann Druckluft in radialer und/oder axialer Richtung ausgegeben werden.

Das Störelement kann alternativ oder zusätzlich ein geometrisches Störelement sein. Mit anderen Worten kann das wenigstens eine Störelement einer lokalen Änderung der Geometrie der Führungsfläche des Führungselements entsprechen. Insbesondere kann das wenigstens eine Störelement eine veränderte Neigung der Führungsfläche umfassen. Im Bereich des Störelements kann sich die Geometrie der Führungsfläche insbesondere diskontinuierlich ändern.

Alternativ zur beschriebenen Ausbildungsform unter Verwendung von Zentrierschiebern kann die Dosiervorrichtung auch entsprechend der DE 10 2012 105 048 A1 beschrieben ausgebildet sein. An die drehbar gelagerte Fördereinrichtung kann also annähernd tangential eine Innenmantelfläche des Gehäuses anschließen. Die Fördereinrichtung kann mit Taschen zusammenwirken, in denen Körner des granularen Materials gedrängt und kreisförmig befördert werden, bis in einem vorherbestimmten Gehäusebereich durch eine veränderte Kontur der Innenmantelfläche des Gehäuses und unter Zentrifugalkrafteinflüssen nur jeweils ein einzelnes Korn in der Tasche verbleibt, während überschüssige Körner ausgesondert werden. Die ausgesonderten Körner können abweichend von der Lehre der DE 10 2012 105 048 A1 dann über die Rückleitung dem Sammelbehälter zugeführt werden.

Die Erfindung stellt außerdem eine Sämaschine bereit, umfassend eine oben beschriebene Dosiervorrichtung. Bei der Sämaschine kann es sich insbesondere um eine Einzelkornsämaschine handeln. Diese Maschine kann insbesondere eine Vielzahl der oben beschriebenen Dosiervorrichtungen umfassen, die insbesondere in einer oder mehreren Reihen angeordnet sind.

Weitere Merkmale und Vorteile der Erfindung werden nachfolgend anhand der beispielhaften Figuren erläutert. Dabei zeigt:
- Figur 1: eine perspektivische Ansicht einer beispielhaften Dosiervorrichtung;
- Figur 2: einen Querschnitt durch die beispielhafte Dosiervorrichtung nach Figur 1;
- Figur 3: einen Querschnitt durch einen Sammelbehälter einer beispielhaften Dosiervorrichtung;
- Figur 4: den Querschnitt des Sammelbehälters gemäß Figur 3 mit eingebrachtem granularen Material;
- Figur 5: einen Querschnitt durch einen alternativen Sammelbehälter einer beispielhaften Dosiervorrichtung;
- Figur 6: einen Querschnitt durch einen weiteren alternativen Sammelbehälter einer beispielhaften Dosiervorrichtung;
- Figur 7A - 7C: eine perspektivische Ansicht sowie zwei Detailansichten des alternativen Sammelbehälters nach Figur 6;
- Figur 8: einen weiteren Querschnitt durch einen alternativen Sammelbehälter nach Figur 6;
- Figur 9: eine perspektivische Ansicht eines weiteren beispielhaften Sammelbehälters;
- Figur 10A - 10C: Querschnitte durch den beispielhaften Sammelbehälter der Figur 9;
- Figur 11: einen weiteren Querschnitt durch einen weiteren alternativen Sammelbehälter;
- Figur 12A und 12B: Querschnitte durch eine beispielhafte Dosiervorrichtung;
- Figur 13: einen Querschnitt durch eine weitere beispielhafte Dosiervorrichtung; und
- Figur 14: einen Querschnitt durch eine weitere beispielhafte Dosiervorrichtung.

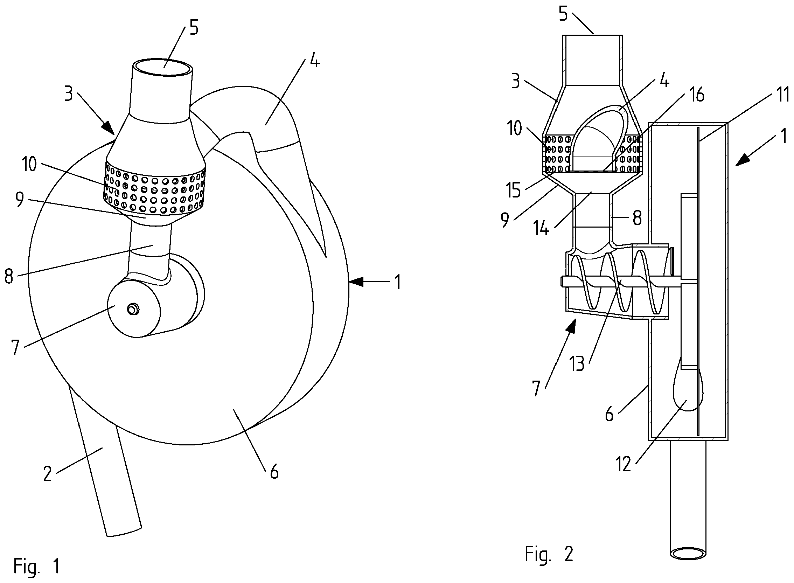

Figur 1 zeigt eine perspektivische Außenansicht einer beispielhaften Dosiervorrichtung für granulares Material gemäß einer Ausführungsform der Erfindung. Die Dosiervorrichtung umfasst ein Gehäuse 1, innerhalb dessen eine hier nicht sichtbare Fördereinrichtung drehbar gelagert ist. Die Fördereinrichtung wirkt mit einer Gehäusewandung oder einem Führungselement so zusammen, dass granulares Material von einem Aufnahmebereich in einen Abgabebereich förderbar ist. Im Abgabebereich ist eine Auslassöffnung vorgesehen, über die das granulare Material aus dem Gehäuse 1 ausgeschleust werden kann. Das so ausgeschleuste granulare Material kann beispielsweise über eine in Figur 1 angedeutete Verbindungsleitung 2 an eine Abgabevorrichtung geleitet werden. Die Abgabevorrichtung kann beispielsweise ein Säschar umfassen.

Ebenfalls in Figur 1 dargestellt ist ein Sammelbehälter 3 für granulares Material. In den Sammelbehälter 3 mündet eine Rückleitung 4, welche den Sammelbehälter 3 und das Innere des Gehäuses 1 miteinander verbindet, so dass Körner des granularen Materials von Gehäuse 1 in den Sammelbehälter 3 über die Rückleitung 4 förderbar sind.

Über eine Einlassöffnung 5 kann granulares Material, beispielsweise Saatgut, von einem hier nicht gezeigten Nachfüllsystem in den Sammelbehälter 3 eingebracht werden. Dieses granulare Material kann zusammen mit dem über die Rückleitung 4 zugeführten granularen Material einen Saatgutvorrat oder Puffer innerhalb des Sammelbehälters 3 bilden. Über eine hier nicht sichtbare Zuführeinrichtung kann das granulare Material dann aus dem Sammelbehälter 3 über die Seitenwand 6 des Gehäuses 1 in das Innere des Gehäuses 1 eingebracht werden, so dass es dort für die Fördereinrichtung bereitgestellt wird. Diese nicht sichtbare Zuführeinrichtung ist Teil einer Vordosiereinheit 7, welche in Figur 1 unterhalb des Sammelbehälters 3 angeordnet ist.

Der Sammelbehälter 3 und die Vordosiereinheit 7 sind hier über eine Verbindungsleitung 8 verbunden. Die Verbindungsleitung 8 schließt an ein trichterförmiges Element 9 an, welches durch einen unteren Wandabschnitt des Sammelbehälters 3 gebildet wird. Die Verbindungsleitung 8 bildet gewissermaßen einen Trichterhals zum trichterförmigen Element 9. Das trichterförmige Element 9 weist eine hier nicht sichtbare Auslauföffnung auf, welche in die Verbindungsleitung 8 mündet.

Unmittelbar oberhalb des trichterförmigen Elements 9 ist ein Abschnitt 10 des Sammelbehälters 3 angeordnet, in dem eine Vielzahl von Durchlassöffnungen vorgesehen sind, die ein Luftauslassgitter oder Luftauslasssieb bilden. Durch diese Luftauslassöffnungen oder Bohrungen im Abschnitt 10 ist es möglich, die Zuführung von granularem Material in den Sammelbehälter 3 wenigstens teilweise selbstregelnd zu gestalten.

Beispielsweise kann ein Nursingsystem zum Beschicken des Sammelbehälters 3 verwendet werden. Dafür kann der Sammelbehälter 3 mit einem zentralen Vorratsbehälter über einen pneumatischen Förderkanal verbunden sein. Der Förderkanal kann über ein Gebläse mit einem Überdruck gegenüber dem Atmosphärendruck beaufschlagt werden. Solange eine Luftströmung über den pneumatischen Förderkanal und die Luftauslassöffnungen in Abschnitt 10 stattfindet, findet auch eine Förderung von granularem Material, insbesondere Saatgut, aus dem zentralen Vorratsbehälter in den Sammelbehälter 3 statt. Sobald jedoch die in den Sammelbehälter 3 eingebrachten Körner des granularen Materials die Öffnungen in Abschnitt 10 blockieren, bricht der Förderluftstrom im pneumatischen Förderkanal ab, so dass auch die weitere Zuführung von granularem Material aus dem zentralen Vorratsbehälter über die Öffnung 5 in den Sammelbehälter 3 stoppt. Ein solches Nursingsysstem ermöglicht also eine weitestgehend selbstregulierende Zuführung von granularem Material zur Dosiervorrichtung.

In Figur 2 ist ein Schnitt durch die beispielhafte Dosiervorrichtung gemäß Figur 1 dargestellt. Insbesondere zeigt Figur 2 das Gehäuse 1, in dessen Inneren die drehbar gelagerte Fördereinrichtung 11 schematisch dargestellt ist. Außerdem zu sehen ist die Auslassöffnung 12, welche im Gehäuse 1 angeordnet ist und eine Verbindung zwischen dem Inneren des Gehäuses 1 und dem Inneren des Verbindungskanals 2 bildet. Über diese Auslassöffnung 12 kann granulares Material aus dem Gehäuse 1 ausgeschleust werden, insbesondere nachdem es von der Fördereinrichtung 11 aus einem Aufnahmebereich in den Aufgabebereich gefördert und damit dosiert wurde. Die Fördereinrichtung 11 kann insbesondere als Vereinzelungsvorrichtung dienen, so dass in regelmäßigen Abständen einzelne Körner des granularen Materials über die Auslassöffnung 12 in den Verbindungskanal 2 eingebracht werden.

Die Drehachse der Fördereinrichtung 8 verläuft in diesem Beispiel horizontal. Im Betrieb der Dosiervorrichtung verläuft die Drehachse parallel zu dem zu bearbeitenden landwirtschaftlichen Boden.

Ebenfalls in Figur 2 ersichtlich sind Teile der Vordosiereinheit 7, die über die Seitenwand 6 in das Gehäuse 1 mündet. Dargestellt ist ein als Schneckenförderer ausgebildeter Rotor 13, welcher geeignet ist, granulares Material aus dem Sammelbehälter 3 in das Innere des Gehäuses 1 zu fördern.

Die Drehachse des Rotors 13 verläuft koaxial zur Drehachse der Fördereinrichtung 11.

Alternativ zur Ausbildung des Rotors 13 als Schneckengewinde oder Schneckenförderer könnte der Rotor auch ein Innengewinde, welches im Inneren der Vordosiereinheit 7 angeordnet ist, antreiben.

Ein nicht dargestellter Motor oder Antrieb ist vorgesehen, um die Fördereinrichtung 11 anzutreiben. Dieser Motor oder Antrieb kann auch zum Antreiben der Vordosiereinheit 7, insbesondere des Rotors 13, vorgesehen sein. Die Dosiervorrichtung kann so ausgebildet sein, dass die Fördereinrichtung mit einer Frequenz zwischen 5 Hz und 60 Hz rotiert. Durch eine Ausbildung der Fördereinrichtung mit beispielsweise drei Zentrierschiebern, welche für die Beförderung jeweils eines Kornes ausgebildet sind, wird so eine Vereinzelungsfrequenz von 15 Hz bis 180 Hz ermöglicht. Dadurch können sehr geringe Abstände zwischen den abgelegten Körnern erzielt werden.

Auch in Figur 2 zu sehen ist das trichterförmige Element 9 und dessen Auslauföffnung 14, welche in die Verbindungsleitung 8 mündet. Über die Verbindungsleitung 8 ist die Auslauföffnung 14 mit der Vordosiereinheit 7 verbunden. In diesem Beispiel weitet sich die Wandung des trichterförmigen Elements 9 von der Auslauföffnung 14 zu einer Zufuhröffnung 15 hin konisch auf. Oberhalb der Auslauföffnung 14 ist die Mündung 16 der Rückleitung 4 angeordnet. Die Mündung 16 der Rückleitung 4 ist konzentrisch zur Auslauföffnung 14 angeordnet. "Konzentrisch" bedeutet hier, dass der Mittelpunkt oder Schwerpunkt der Mündung 16, wenn diese in die Ebene der Auslauföffnung 14 projiziert wird, gleich dem Mittelpunkt oder Schwerpunkt der Auslauföffnung 14 ist.

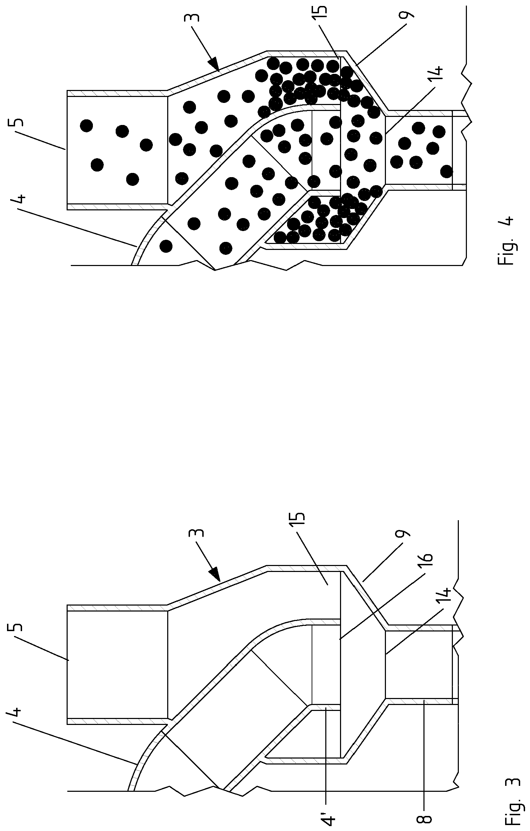

In Figur 3 ist ein Querschnitt durch einen beispielhaften Sammelbehälter 3 dargestellt. Erneut zu erkennen ist in Figur 3 das trichterförmige Element 9 mit seiner Auslauföffnung 14, sowie der die Rückleitung 4 ringförmig umgebenden Zufuhröffnung 15. Die in einer Ebene mit der Zufuhröffnung 15 liegende Mündung 16 der Rückleitung 4 ist konzentrisch zur Auslauföffnung 14 angeordnet. Der Mittelpunkt der Mündung 16 liegt also wie auch der Mittelpunkt der Auslauföffnung 14 auf der Längs- oder Symmetrieachse des trichterförmigen Elements 9. An die Auslauföffnung 14 schließt die Verbindungsleitung 8 an, welche gewissermaßen einen Trichterhals zum trichterförmigen Element 9 bildet.

Wie man der Schnittdarstellung der Figur 3 entnehmen kann, ist die Rückleitung 4 teilweise im Inneren des Sammelbehälters 3 angeordnet. Der Leitungsabschnitt 4' ist dabei koaxial zur Längs- oder Symmetrieachse des trichterförmigen Elements 9 angeordnet.

Der Durchmesser der Mündung 16 ist in diesem Beispiel größer als der Durchmesser der Auslauföffnung 14.

In der Figur 3 nicht dargestellt sind die Luftauslassöffnungen des Abschnitts 10. Diese können aber gleichwohl vorhanden sein.

Figur 4 zeigt den Sammelbehälter 3 der Figur 3 jedoch mit darin eingebrachtem granularem Material.

Durch die Fördereinrichtung 11 im Gehäuse 1 der Dosiervorrichtung wird granulares Material in einem Aufnahmebereich aufgenommen und dann in den Abgabebereich gefördert, und zwar derart, dass über die Auslassöffnung 12 eine gewünschte Anzahl von Körnern pro Zeiteinheit ausgegeben wird, üblicherweise ein einzelnes Korn. Damit die Vereinzelung ordnungsgemäß durchgeführt werden kann, muss im Aufnahmebereich der Fördereinrichtung eine größere Anzahl von Körnern des granularen Materials bereitgestellt werden. Während der Förderung vom Aufnahmebereich in den Abgabebereich werden überschüssige Körner durch Zusammenwirkung mit der Gehäusewandung oder einem Führungselement ausgesondert. Diese ausgesonderten Körner können dann über die Rückleitung 4 aus dem Gehäuse 1 ausgebracht und in den Sammelbehälter 3 zurückgeführt werden. Diese zurückgeführten Körner werden aufgrund der konzentrischen Anordnung der Mündung nahe der Längs- oder Symmetrieachse des trichterförmigen Elements 9 in das trichterförmige Element 9 eingebracht.

Granulares Material, welches über die Einlassöffnung 5 über ein Nachfüllsystem in den Sammelbehälter 3 eingebracht wird, gelangt über die ringförmige Zufuhröffnung 15 des trichterförmigen Elements 9 lediglich in einen Bereich mit größeren Abstand zur Längs- oder Symmetrieachse des trichterförmigen Elements 9. Dadurch gelangen diese üblicherweise nur in den Bereich der Auslauföffnung 14, wenn die Stützwirkung über die zentralen Körner wegfällt. Dies wiederum ist üblicherweise dann der Fall, wenn die Rückführung des granularen Materials über den Rückkanal 4 reduziert wird oder abbricht.

Auf diese Weise kann verhindert werden, dass im Aufnahmebereich der Fördereinrichtung 11 zu viele Körner bereitgestellt werden, was einer zuverlässigen Vereinzelung abträglich sein könnte. Andererseits können bedarfsgerecht neue Körner zugeführt werden, so dass stets eine ausreichende Anzahl von Körnern des granularen Materials für die Fördereinrichtung 11 bereitsteht.

Beispielsweise kann das Förderelement der Vordosiereinheit 7 der Figur 2 so ausgebildet sein, dass sie mit jeder Umdrehung zehn Körner des granularen Materials in das Innere des Gehäuses 1 einbringt. Durch den Vereinzelungsprozess wird durch die Fördereinrichtung 11 von den zugeführten zehn Körnern ein Korn entnommen. Die übrigen neun Körner werden über die Rückleitung 4 in den Sammelbehälter 3 zurückgeführt. Dort rutschen zunächst die zurückgeführten neun Körner über die Auslauföffnung 14 und den Verbindungskanal 8 in die Vordosiereinheit 7, während ein Korn aus der Saatgutsäule des Vorratsbehälters 3 nachrutscht. Dadurch können wieder 10 Körner an die Fördereinrichtung 11 gefördert werden.

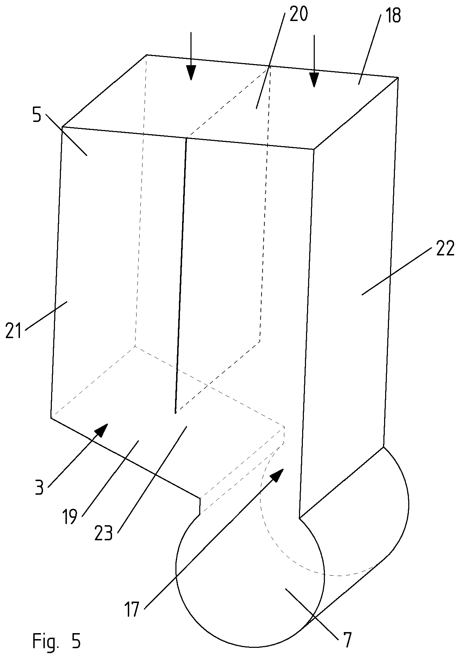

In Figur 5 ist eine alternative Ausführungsform eines beispielhaften Sammelbehälters 3 dargestellt. Dieser Sammelbehälter 3 weist eine Einlassöffnung 5 auf, über die, wie oben beschrieben, granulares Material von einem hier nicht gezeigten Nachfüllsystem in den Sammelbehälter 3 eingebracht werden kann. Über die Mündung 18 mündet eine hier ebenfalls nicht dargestellte Rückleitung in den Sammelbehälter 3.

Eine Ausbringöffnung 17 ist am Boden des Sammelbehälters 3 angeordnet, über die der Sammelbehälter 3 mit einer Vordosiereinheit 7 verbunden ist. Die Vordosiereinheit 7 kann wie oben beschrieben ausgebildet und angeordnet sein.

Die Mündung 18 ist oberhalb der Ausbringöffnung 17 und diese überlappend angeordnet. Die Einlassöffnung 5 ist dagegen oberhalb einer schiefen Ebene 19 angeordnet, welche teilweise den Boden des Sammelbehälters 3 bildet. Über eine Trennwand 20 wird der Sammelbehälter 3 außerdem in zwei Teilkammern 21, 22 unterteilt. Da die Trennwand 20 nicht bis zum Boden des Sammelbehälters 3 reicht, ist ein Durchlass 23 ausgebildet, über den granulares Material von der Teilkammer 21 zur Auslassöffnung 17 gelangen kann.

Durch die gezeigte Anordnung der Öffnungen kann erreicht werden, dass über die Rückleitung eingebrachtes granulares Material bevorzugt gegenüber granularem Material, das über die Einlassöffnung 5 zugeführt wird, aus dem Sammelbehälter 3 ausbringbar ist. Der Körnerstrom, der von der Mündung 18 zur Ausbringöffnung 17 führt, kann nämlich das Nachrutschen von granularem Material über die schiefe Ebene 19 blockieren. Erst wenn dieser Strom nachlässt oder abbricht, gelangt granulares Material über die schiefe Ebene 19 in die Auslassöffnung 17.

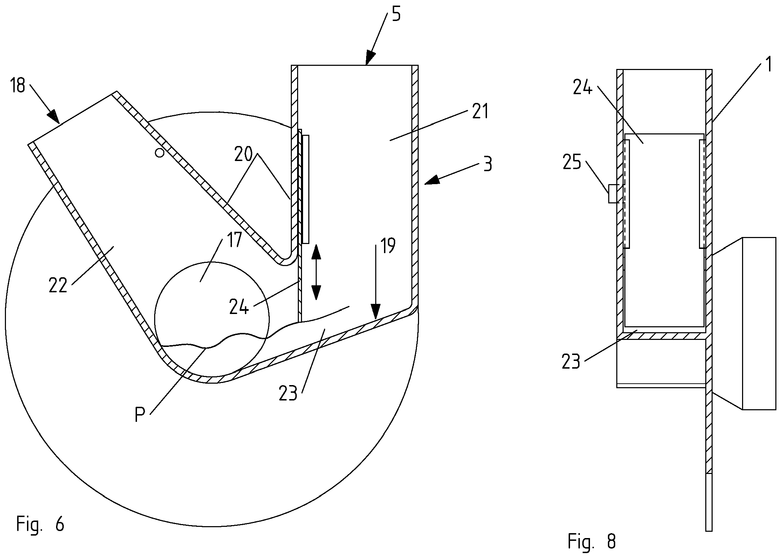

In Figur 6 ist eine weitere alternative Ausführungsform eines beispielhaften Sammelbehälters 3 dargestellt. Dieser Sammelbehälter 3 weist ebenfalls eine Einlassöffnung 5 auf, über die, wie oben beschrieben, granulares Material von einem hier nicht gezeigten Nachfüllsystem in den Sammelbehälter 3 eingebracht werden kann. Über die Mündung 18 mündet eine hier ebenfalls nicht dargestellte Rückleitung in den Sammelbehälter 3.

Eine Ausbringöffnung 17 ist hier im Gegensatz zum Ausführungsbeispiel der Figur 5 in einer Seitenwand des Sammelbehälters 3 angeordnet. Über die Ausbringöffnung 17 kann granulares Material in eine hier nicht gezeigte Vordosiereinheit verbracht werden.

Wie auch im Ausführungsbeispiel der Figur 5 umfasst der Sammelbehälter 3 der Figur 6 zwei Teilkammern 21, 22, die über einen Durchlass 23 verbunden sind. Im Gegensatz zu Figur 5 ist die Trennwand 20 in diesem Fall jedoch keine plane Wandung, sondern eine gekrümmte.

Die Ausbringöffnung 17 ist in diesem Beispiel vollständig in der zweiten Teilkammer 22 angeordnet. Im Bereich dieser Ausbringöffnung 17 bildet sich im Betrieb der Dosiervorrichtung ein Pegel P an granularem Material aus, das einerseits aus der Rückleitung andererseits von der Zuführung über das Nachfüllsystem stammt. Der Pegel P sollte weder zu hoch noch zu niedrig sein. Die Größe des Pegels hängt unter anderem von der Fließfähigkeit des granularen Materials ab, da das neu zugeführte granulare Material über die schiefe Ebene 19 zugeführt wird.

Entsprechend ist vorgesehen, die Größe des Durchlasses 23 mittels eines Verschlussschiebers 24 (Stellschieber) einstellbar zu gestalten. Insbesondere kann der Verschlussschieber 24 wie durch den Doppelpfeil in Figur 6 angedeutet in senkrechter Richtung verschoben werden, sodass der Abstand zwischen dem Boden des Sammelbehälters 3 und der Unterkante des Verschlussschiebers 24 und damit die Größe des Durchlasses 23 variiert werden kann. Beispielsweise kann bei schlechter Fließfähigkeit des granularen Materials (beispielsweise bei gebeizter Gerste) eine größere Öffnung des Durchlasses 23 gewählt werden, als bei sehr guter Fließfähigkeit (beispielsweise bei Raps). Durch den Verschlussschieber 24 kann also dem Fließverhalten unterschiedlicher granularer Materialien Rechnung getragen werden und der Pegel P entsprechend eingestellt werden.

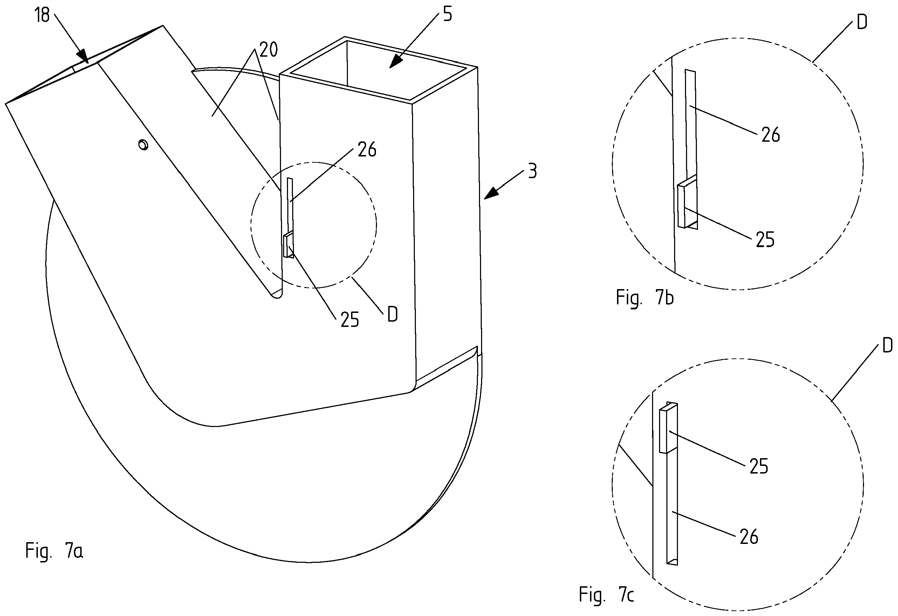

Um den Verschlussschieber 24 in die gewünschte Position zu bringen, kann ein Betätigungselement 25, wie in Figur 7A dargestellt, verwendet werden. Dieses Betätigungselement 25 ist mit dem Verschlussschieber 24 verbunden und wird durch ein Langloch 26 durch die Wandung des Sammelbehälters 3 nach außen geführt. Das Betätigungselement 25 kann also von außen bedient werden, insbesondere entlang des Langlochs 26 kontinuierlich verschoben werden. Eine nicht näher dargestellte Befestigungsvorrichtung des Verschlussschiebers 24 kann beispielsweise durch Kraftschluss bewirken, dass der Verschlussschieber 24 in einer eingestellten Position verbleibt.

Zwei beispielhafte Positionen des Betätigungselements 25 sind in den Figuren 7B und 7C dargestellt. Figur 7B zeigt die unterste Position des Betätigungselements 25 im Langloch 26. Diese Position kann einer Position des Verschlussschiebers 24 entsprechen, bei der die Größe des Durchlasses 23 minimal wird. Es ist auch möglich, dass der Verschlussschieber 24 in diesem Fall den Durchlass 23 komplett verschließt. Figur 7C zeigt dagegen die oberste Position des Betätigungselements 25 im Langloch 26. Diese Position kann einer Position des Verschlussschiebers 24 entsprechen, bei der die Größe des Durchlasses 23 maximal wird. Es ist auch möglich, dass der Durchlass 23 in diesem Fall komplett geöffnet ist.

Figur 8 zeigt einen weiteren Querschnitt der Ausführungsform der Figur 6. Aus dieser Ansicht wird insbesondere ersichtlich, dass sich der Verschlussschieber 24 entlang der gesamten Breite des Durchlasses 23 erstreckt und die verbleibende Größe des Durchlasses 23 daher durch den Abstand zwischen der Unterkante des Verschlussschiebers 24 und dem Boden des Sammelbehälters 3 bestimmt wird.

Der Verschlussschieber 24 dieses Ausführungsbeispiels kann kontinuierlich verschoben werden. Es ist jedoch auch denkbar, dass ein Verschlussschieber vorgesehen wird, der nur in vorbestimmten diskreten Positionen arretierbar ist. Die vorherbestimmten diskreten Positionen können dabei unterschiedlichen Fließverhalten und somit unterschiedlichen granularen Materialien entsprechen.

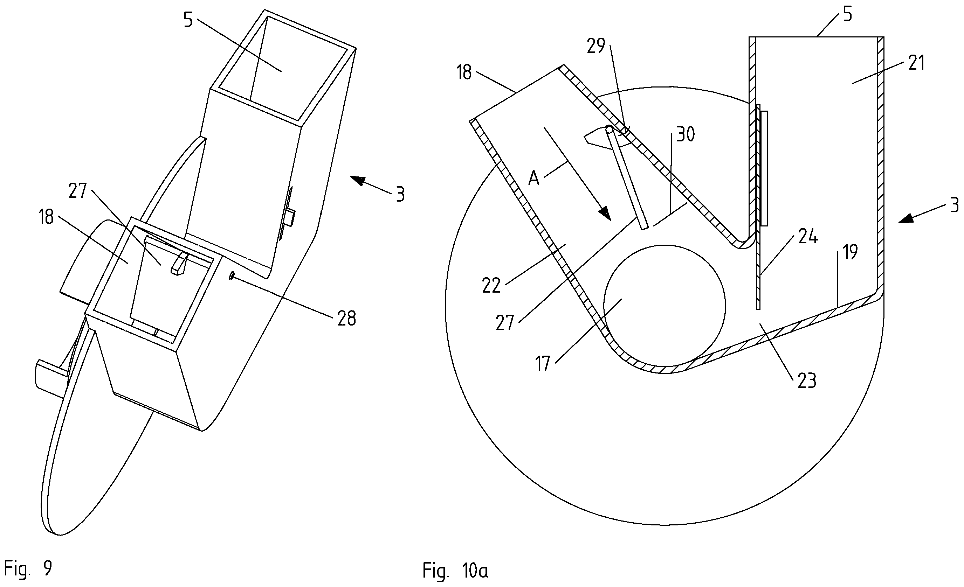

In Figur 9 ist eine perspektivische Ansicht eines weiteren beispielhaften Sammelbehälters 3 gezeigt. Die Besonderheit dieses Ausführungsbeispiels liegt darin, dass im Sammelbehälter im Bereich der Mündung 18 der Rückleitung in den Sammelbehälter 3 eine Rückschlagklappe 27 angeordnet ist. Die Rückschlagklappe 27 ist insbesondere zwischen der Mündung 18 und der hier nicht ersichtlichen Ausbringöffnung des Sammelbehälters angeordnet. Diese Rückschlagklappe 27 dient dazu, eine Förderung von granularem Material aus dem Sammelbehälter 3 über die Rückleitung in das Gehäuse der Dosiervorrichtung zu verhindern oder wenigstens zu erschweren. Die Schwenkachse 28 der Rückschlagklappe 27 ist in Figur 9 ebenfalls angedeutet.

Figur 10A zeigt einen Querschnitt durch den beispielhaften Sammelbehälter 3 der Figur 9. Die Rückschlagklappe 27 ist in diesem Fall in Durchlassstellung angeordnet. In dieser Position der Rückschlagklappe 27 ist ein Transport von granularem Material in der durch den Pfeil A angedeuteten Transportrichtung möglich. Diese Transportrichtung A führt vom Gehäuse über die Rückleitung hin zur Ausbringöffnung 17. Um zu verhindern, dass sich die Rückschlagklappe 27 an die Innenwand des Sammelbehälters 3 anlegt, ist ein Anschlag 29 vorgesehen. Durch diesen wird erreicht, dass für einen Förderstrom entgegengesetzt der Richtung A eine Mindestangriffsfläche 30 vorliegt, so dass die Rückschlagklappe 27 geschlossen werden kann, wenn sich aus irgendwelchen Gründen die Transportrichtung umkehrt.

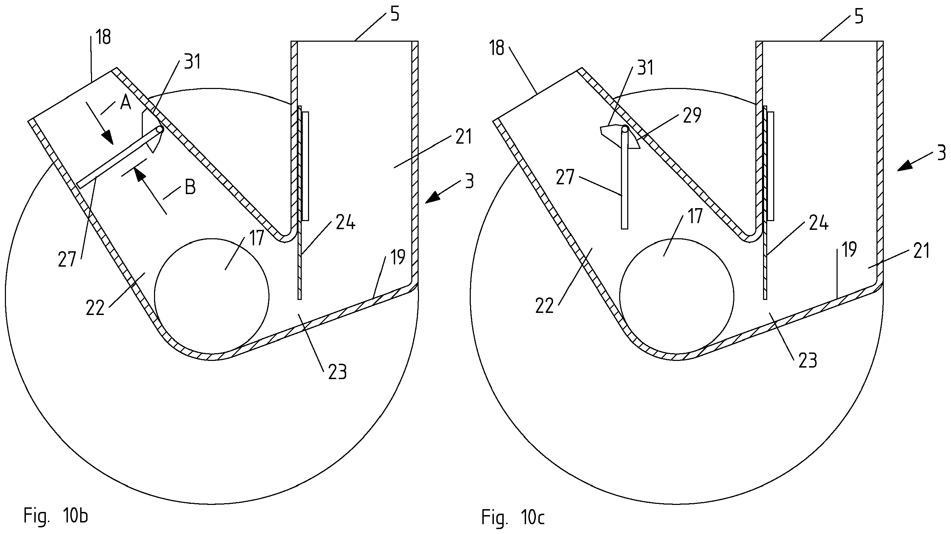

Figur 10B zeigt die Rückschlagklappe 27 in Sperrstellung, da eine Strömung in Richtung B, die der Transportrichtung A entgegengesetzt ist, vorliegt. Zu einer solchen Strömung in Richtung B kann es beispielsweise kommen, wenn zu Beginn der Bearbeitung ein Nursingsystem in Betrieb genommen wird, sich im Sammelbehälter 3 aber noch kein granulares Material angeordnet hat. In diesem Fall kann das über die Einlassöffnung 5 zugeführte granulare Material ungehindert in die zweite Kammer 22 strömen und von dort aus gegebenenfalls weiter in die Rückleitung und das Gehäuse der Dosiervorrichtung. Dies wird durch die Rückschlagklappe 27 in Sperrstellung verhindert. Ein zweiter Anschlag 31 ist vorgesehen, um zu verhindern, dass die Rückschlagklappe 27 über die Sperrstellung hinaus in die Gegenrichtung B verschwenkt.

In Figur 10C ist die Rückschlagklappe 27 in einer Neutralstellung dargestellt. Es liegt hier weder ein Strom in Transportrichtung A noch in Gegenrichtung B vor. In der Neutralstellung liegt weder Anschlagelement 29 noch Anschlagelement 31 an einer Seitenwandung des Sammelbehälters 3 an. Die Neutralstellung der Rückschlagklappe 27 wird in diesem Beispiel durch die Anordnung der Schwenkachse 28 und die Wirkung der Schwerkraft bestimmt.

In dem beschriebenen Ausführungsbeispiel sind der erste Anschlag 29 und der zweite Anschlag 31 einstückig ausgebildet. Beide Anschläge sind also in einem Element kombiniert, welches starr mit der Rückschlagklappe 27 verbunden ist. Es wäre jedoch auch denkbar, dass zwei separate Anschlagelemente vorgesehen sind.

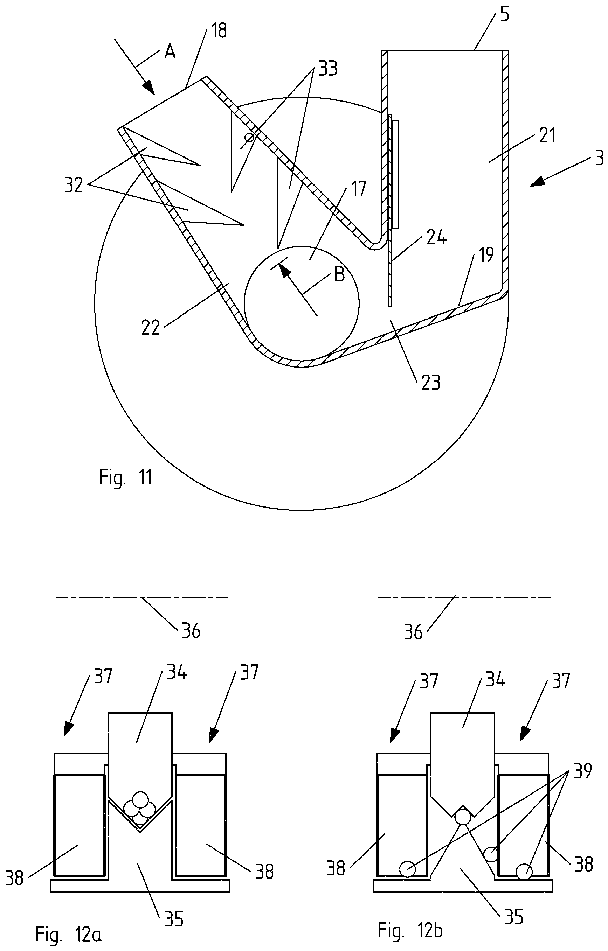

Figur 11 zeigt einen Querschnitt durch einen weiteren beispielhaften Sammelbehälter 3. Um einen Rückfluss von granularem Material über die Rückleitung in das Gehäuse der Dosiervorrichtung zu erschweren, sind in diesem Beispiel anstelle einer Rückschlagklappe mehrere Leitelemente 32,33 vorgesehen. Die Leitelemente 32,33 sind an gegenüberliegenden Innenseiten des Sammelbehälters 3, insbesondere der zweiten Teilkammer 22 angeordnet. In diesem Beispiel sind die Leitelemente 32,33 keilförmig ausgebildet, wobei die Spitzen der Leitelemente 32,33 in Richtung der gewünschten Transportrichtung A weisen. Die Leitelemente 32,33 sind kaskadenartig angeordnet, insbesondere sind die Leitelemente 33 versetzt gegenüber den Leitelementen 32 angeordnet.

Durch die Leitelemente 32,33 wird granulares Material, welches sich in Gegenrichtung B bewegt tendenziell zu den Seitenwänden des Sammelbehälters 3 hin geführt, wo es durch die Leitelemente 32,33 an einer weiteren Bewegung in Gegenrichtung B gehindert wird. Bei einer Strömung in Transportrichtung A wird das granulare Material dagegen hin zur passierbaren Mitte im Zentrum der Teilkammer 22 geleitet, so dass ein Transport zur Ausbringöffnung 17 hin möglich ist. In diesem Beispiel sind zwei Leitelemente 32,33 pro Seite vorgesehen, dies ist jedoch nicht einschränkend. Es könnten pro Seite auch weniger oder mehr als zwei Leitelemente vorgesehen sein.

Die Figuren 12A und 12B zeigen jeweils einen Querschnitt durch das Gehäuse einer beispielhaften Dosiervorrichtung. Dabei ist ein Zentrierschieber 34 zu erkennen, der granulares Material entlang einer Führungsfläche eines Führungselements 35 von einem Aufnahmebereich in einen Abgabebereich schiebt und dabei ein Korn zentriert, indem er es beidseitig abstützt oder führt. Nicht zentrierte Körner, die im Aufnahmebereich aufgenommen und entlang der Führungsfläche transportiert werden, können infolge ausgesondert werden, sodass im Abgabebereich das zentrierte Korn verbleibt und an ein Abgabeelement zur Ablage auf einer landwirtschaftlichen Fläche weitergeleitet werden kann. Insbesondere kann genau ein Korn durch den Zentrierschieber zentriert geführt werden. Die Dosiervorrichtung kann also eine Vereinzelungsvorrichtung sein.

Zu beiden Seiten des Führungselements 35 erstreckt sich ein Sammelraum 37, in den ausgesonderte Körner gelangen. Diese ausgesonderten Körner können über eine Rückleitung 4 (siehe beispielsweise Figur 1) in einen Sammelbehälter gelangen. Um die ausgesonderten Körner zuverlässig in die Rückleitung zu fördern, sind im Sammelraum 37 zu beiden Seiten des Führungselements 35 Mitnehmer 38 vorgesehen. Die Mitnehmer 38 sind in diesem Beispiel am Zentrierschieber 34 montiert, sodass sie gemeinsam mit dem Zentrierschieber 34 um die gemeinsame Drehachse 36 rotieren können.

Figur 12B zeigt einen Querschnitt durch das Gehäuse der beispielhaften Dosiervorrichtung der Figur 12A, jedoch im Abgabebereich der Fördereinrichtung. Das Führungselement 35 weist im Abgabebereich eine veränderte Form auf. Insbesondere weist das Führungselement 35 einen in Drehrichtung verlaufenden Grat aufweisen. Durch einen solchen Grat wird eine Vereinzelung des granularen Materials weiter gefördert, da entlang des Grats üblicherweise nur ein Korn stabil bewegt werden kann, nämlich das Korn, welches wenigstens teilweise durch den Zentrierschieber 34 zentriert wird. Die vorherbestimmte Bahn entlang der Führungsfläche, entlang der der Zentrierschieber 34 ein Korn zentriert bewegt, verläuft entlang des Grats.

Die ausgesonderten Körner 39 sind im Sammelraum 37 gezeigt und werden durch die Mitnehmer 38 entlang der Innenmantelfläche des Gehäuses 1, welche den Sammelraum radial begrenzt, geschoben bis sie an der Mündung der Rückleitung in das Gehäuse der Dosiervorrichtung in die Rückleitung gefördert werden.

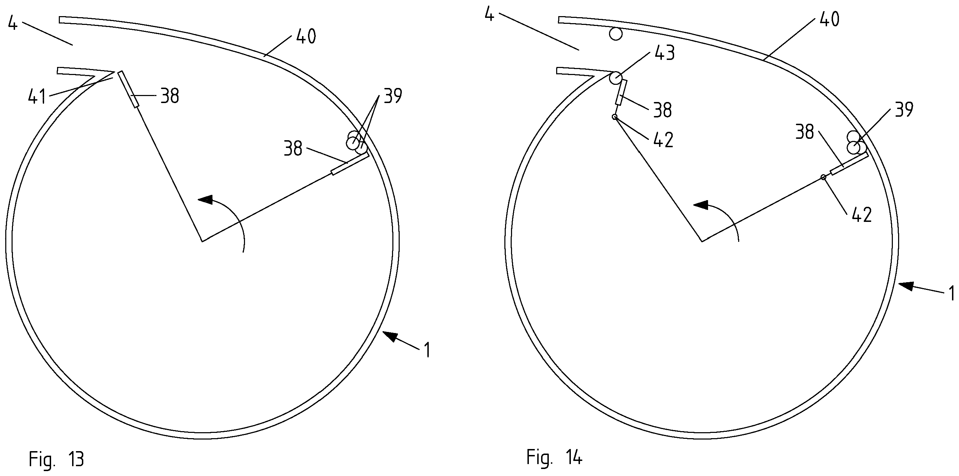

Figur 13 zeigt einen weiteren Querschnitt durch ein Gehäuse 1 einer beispielhaften Dosiervorrichtung. Die Darstellung ist vereinfacht, um die Funktionsweise der Mitnehmer zu illustrieren. Zu erkennen ist die Rückleitung 4, welche in das Gehäuse 1 einmündet. Die Rückleitung 4 führt dabei tangential in das Gehäuse 1, so dass ein tangentialer Übergang 40 entsteht. In diesem Beispiel sind zwei drehbar gelagerte Mitnehmer 38 gezeigt. Die Drehrichtung ist durch einen Pfeil angedeutet. Durch die Mitnehmer 38 können ausgesonderte Körner 39 des granularen Materials entlang des Sammelraums bewegt und schließlich in die Rückleitung 4 gefördert werden. Dies ist insbesondere dann von Vorteil, wenn die ausgesonderten Körner 39 durch die Aussonderung selbst keine hinreichende kinetische Energie erhalten haben, um das Gehäuse 1 über die Rückleitung 4 zu verlassen.

Aufgrund der tangentialen Einmündung der Rückleitung 4 in das Gehäuse 1 entsteht durch die Innenfläche der Rückleitung 4 und der Innenmantelfläche des Gehäuses 1 eine Kante. Durch diese Kante entsteht eine Scherstelle 41 zu den Mitnehmern 38. Um eine Beschädigung der Körner zu vermeiden, sind die Mitnehmer 38 in diesem Beispiel aus einem flexiblen Material, beispielsweise Gummi, hergestellt. Dadurch können die Mitnehmer 38 entgegen der Drehrichtung ausweichen, wenn sie auf ein klemmendes Korn treffen.

Es ist auch möglich, dass nur jeweils ein Endstück der Mitnehmer 38 aus dem flexiblen Material gefertigt ist, während die Mitnehmer ansonsten aus einem starren Material gefertigt sind.

Figur 14 zeigt eine alternative Ausführung der Mitnehmer 38. In diesem Beispiel sind die Mitnehmer 38 starr ausgebildet. Die Mitnehmer 38 umfassen jedoch Gelenke 42, deren Gelenksachsen quer zur Drehrichtung verlaufen. Daher kann der äußere Teil der Mitnehmer 38 entgegen der Drehrichtung ausweichen, wenn ein Mitnehmer 38 auf ein klemmendes Korn 43 trifft. Im sonstigen Betrieb sind die Mitnehmer 38 gestreckt, da die wirkende Fliehkraft einem Verschwenken um die Gelenksachse entgegenwirkt.

Es versteht sich, dass in den zuvor beschriebenen Ausführungsbeispielen genannte Merkmale nicht auf diese speziellen Kombinationen beschränkt sind und auch in beliebigen anderen Kombinationen innerhalb des Schutzbereichs der Patentansprüche möglich sind. Insbesondere kann das trichterförmige Element auch ein separates Element sein, das im Inneren des Sammelbehälters angeordnet wird.

## Patentansprüche

1. Dosiervorrichtung für granulares Material, insbesondere Saatgut, wobei die Dosiervorrichtung eine in einem Gehäuse (1) drehbar gelagerte Fördereinrichtung (11) umfasst, die mit einer Gehäusewandung oder einem Führungselement so zusammenwirkt, dass granulares Material von einem Aufnahmebereich in einen Abgabebereich förderbar ist,
wobei das Gehäuse (1) mit einem Sammelbehälter (3) zum Bereitstellen von granularem Material verbunden ist;
wobei eine Rückleitung (4) vom Gehäuse in den Sammelbehälter (3) führt;
wobei der Sammelbehälter (3) über eine Einlassöffnung (5) mit granularem Material befüllbar ist; **dadurch gekennzeichnet, dass** granulares Material über eine Auslauf- oder Ausbringöffnung (14, 17) des Sammelbehälters (3) unmittelbar oder über eine Verbindungsleitung (8) in eine Vordosiereinheit (7) einbringbar ist, die so ausgebildet ist, dass sie granulares Material über eine Zuführöffnung in das Gehäuse (1) fördert; und
wobei die Vordosiereinheit (7) einen Rotor (13) umfasst, dessen Drehachse koaxial zur Drehachse der Fördereinrichtung (11) verläuft.

2. Dosiervorrichtung nach Anspruch 1, wobei der Sammelbehälter (3) ein trichterförmiges Element (9) umfasst, wobei das trichterförmige Element (9) eine Zufuhröffnung (15) und eine Auslauföffnung (14) umfasst; und
wobei eine Mündung (16) der Rückleitung (4) in den Sammelbehälter (3) konzentrisch zur Auslauföffnung (14) des trichterförmigen Elements (9) angeordnet ist.

3. Dosiervorrichtung nach Anspruch 2, wobei die Mündung (16) der Rückleitung (4) im Inneren des Sammelbehälters (3) angeordnet ist.

4. Dosiervorrichtung nach Anspruch 2 oder 3, wobei das trichterförmige Element (9) durch einen Wandabschnitt des Sammelbehälters (3) gebildet wird.

5. Dosiervorrichtung nach einem der vorangegangenen Ansprüche, wobei das granulare Material unter Schwerkraftwirkung vom Sammelbehälter (3) in die Vordosiereinheit (7) förderbar ist.

6. Dosiervorrichtung nach einem der vorangegangenen Ansprüche, wobei eine Mündung (16; 18) der Rückleitung (4) in den Sammelbehälter (3) oberhalb der Auslauf- oder Ausbringöffnung (14; 17) angeordnet ist und diese vollständig oder teilweise überlappt.

7. Dosiervorrichtung nach Anspruch 6, wobei der Boden des Sammelbehälters (3) eine zur Ausbringöffnung (17) geneigte schiefe Ebene (19) umfasst, und wobei die Einlassöffnung (5) oberhalb der schiefen Ebene (19) angeordnet ist.

8. Dosiervorrichtung nach Anspruch 7, wobei die schiefe Ebene (19) unmittelbar an die Ausbringöffnung (17) angrenzt.

9. Dosiervorrichtung nach einem der vorangegangenen Ansprüche 1 oder 5-8, wobei die Zuführung von über die Einlassöffnung (5) eingebrachtem granularem Material zur Ausbringöffnung (17) mittels eines Verschlussschiebers (24) einstellbar ist.

10. Dosiervorrichtung nach einem der vorangegangenen Ansprüche, wobei in der Rückleitung und/oder im Sammelbehälter ein oder mehrere Elemente vorgesehen sind, welche einen Transport von granularem Material vom Sammelbehälter (3) über die Rückleitung (4) in das Gehäuse (1) verhindern oder erschweren.

11. Dosiervorrichtung nach Anspruch 10, wobei die ein oder mehreren Elemente eine Rückschlagklappe (27) umfassen.

12. Dosiervorrichtung nach Anspruch 10 oder 11, wobei die ein oder mehreren Elemente keilförmige Leitelemente (32, 33) umfassen, deren Spitze in die gewünschte Transportrichtung (A) weisen, die vom Gehäuse (1) über die Rückleitung (4) in den Sammelbehälter (3) führt.

13. Dosiervorrichtung nach einem der vorangegangenen Ansprüche, wobei die Dosiervorrichtung wenigstens einen drehbar gelagerten Mitnehmer (38) umfasst, durch welchen ausgesonderte Körner (39) des granularen Materials in einem Sammelraum (37) beschleunigt und in Folge durch Fliehkraft aus dem Sammelraum (37) ausgebracht und in die Rückleitung (4) gefördert werden können.

14. Dosiervorrichtung nach Anspruch 13, wobei der wenigstens eine Mitnehmer (38) so ausgebildet ist, dass er wenigstens teilweise entgegen seiner Drehrichtung ausweichen kann.

15. Sämaschine umfassend eine Dosiervorrichtung nach einem der vorangegangenen Ansprüche.

## Claims

1. Dispensing apparatus for granular material, in particular seeds, the dispensing apparatus comprising a conveying device (11) which is mounted rotatably in a housing (1) and interacts with a housing wall or guide element in such a way that granular material can be conveyed from a receiving region into a discharging region,
the housing (1) being connected to a collecting container (3) for providing granular material;
a return line (4) leading from the housing into the collecting container (3);
it being possible for the collecting container (3) to be filled with granular material via an inlet opening (5) ;
**characterized in that** granular material can be introduced directly via an outlet or discharge opening (14, 17) of the collecting container (3) or via a connecting line (8) into a pre-dispensing unit (7) which is configured in such a way that it conveys granular material via a feed opening into the housing (1); and
the pre-dispensing unit (7) comprising a rotor (13), the rotational axis of which runs coaxially with respect to the rotational axis of the conveying device (11).

2. Dispensing apparatus according to Claim 1, the collecting container (3) comprising a funnel-shaped element (9), the funnel-shaped element (9) comprising a feed opening (15) and an outlet opening (14); and
an orifice (16) of the return line (4) into the collecting container (3) being arranged concentrically with respect to the outlet opening (14) of the funnel-shaped element (9).

3. Dispensing apparatus according to Claim 2, the orifice (16) of the return line (4) being arranged in the interior of the collecting container (3).

4. Dispensing apparatus according to Claim 2 or 3, the funnel-shaped element (9) being formed by way of a wall section of the collecting container (3).

5. Dispensing apparatus according to one of the preceding claims, it being possible for the granular material to be conveyed from the collecting container (3) into the pre-dispensing unit (7) under the action of gravity.

6. Dispensing apparatus according to one of the preceding claims, an orifice (16; 18) of the return line (4) into the collecting container (3) being arranged above the outlet or discharge opening (14; 17) and overlapping completely or partially with the latter.

7. Dispensing apparatus according to Claim 6, the bottom of the collecting container (3) comprising an oblique plane (19) which is inclined with respect to the discharge opening (17), and the inlet opening (5) being arranged above the oblique plane (19).

8. Dispensing apparatus according to Claim 7, the oblique plane (19) adjoining the discharge opening (17) directly.

9. Dispensing apparatus according to one of the preceding Claims 1 or 5 to 8, it being possible for the feeding of granular material which is introduced via the inlet opening (5) to the discharge opening (17) to be set by means of a locking slider (24).

10. Dispensing apparatus according to one of the preceding claims, one or more elements being provided in the return line and/or in the collecting container, which elements prevent or impede a transport of granular material from the collecting container (3) via the return line (4) into the housing (1).

11. Dispensing apparatus according to Claim 10, the one or more elements comprising a check flap (27).

12. Dispensing apparatus according to Claim 10 or 11, the one or more elements comprising wedge-shaped guide elements (32, 33), the tips of which point in the desired transport direction (A) which leads from the housing (1) via the return line (4) into the collecting container (3).

13. Dispensing apparatus according to one of the preceding claims, the dispensing apparatus comprising at least one rotatably mounted driver (38), by way of which discarded grains (39) of the granular material can be accelerated in a collecting space (37) and can be subsequently discharged from the collecting space (37) by way of centrifugal force and can be conveyed into the return line (4).

14. Dispensing apparatus according to Claim 13, the at least one driver (38) being configured in such a way that it can yield at least partially counter to its rotational direction.

15. Seed drill comprising a dispensing apparatus according to one of the preceding claims.

## Revendications

1. Dispositif de dosage pour matériau granulaire, en particulier des semences, le dispositif de dosage comportant un dispositif de transport (11) monté de manière rotative dans un boîtier (1), lequel dispositif de transport coopère avec une paroi de boîtier ou un élément de guidage de telle sorte que du matériau granulaire puisse être transporté à partir d'une région de réception dans une région de distribution,
le boîtier (1) étant relié à un réservoir collecteur (3) pour fournir du matériau granulaire ;
une conduite de retour (4) menant du boîtier au réservoir collecteur (3) ;
le réservoir collecteur (3) pouvant être rempli de matériau granulaire par le biais d'une ouverture d'entrée (5) ;
**caractérisé en ce que** le matériau granulaire peut être introduit dans une unité de pré-dosage (7) par le biais d'une ouverture de sortie ou d'évacuation (14, 17) du réservoir collecteur (3) directement ou par le biais d'une conduite de liaison (8), laquelle unité de pré-dosage est réalisée de telle sorte qu'elle transporte du matériau granulaire par le biais d'une ouverture d'alimentation dans le boîtier (1) ; et
l'unité de pré-dosage (7) comportant un rotor (13) dont l'axe de rotation s'étend de manière coaxiale à l'axe de rotation du dispositif de transport (11).

2. Dispositif de dosage selon la revendication 1, dans lequel le réservoir collecteur (3) comporte un élément (9) en forme d'entonnoir, dans lequel l'élément (9) en forme d'entonnoir comporte une ouverture d'alimentation (15) et une ouverture de sortie (14) ; et
dans lequel un débouché (16) de la conduite de retour (4) dans le réservoir collecteur (3) est disposé concentriquement à l'ouverture de sortie (14) de l'élément (9) en forme d'entonnoir.

3. Dispositif de dosage selon la revendication 2, dans lequel le débouché (16) de la conduite de retour (4) est disposé à l'intérieur du réservoir collecteur (3) .

4. Dispositif de dosage selon la revendication 2 ou 3, dans lequel l'élément (9) en forme d'entonnoir est formé par une partie de paroi du réservoir collecteur (3) .

5. Dispositif de dosage selon l'une des revendications précédentes, dans lequel le matériau granulaire peut être transporté à partir du réservoir collecteur (3) dans l'unité de pré-dosage (7) sous l'effet de la gravité.

6. Dispositif de dosage selon l'une des revendications précédentes, dans lequel un débouché (16 ; 18) de la conduite de retour (4) dans le réservoir collecteur (3) est disposé au-dessus de l'ouverture de sortie ou d'évacuation (14 ; 17) et chevauche celle-ci complètement ou partiellement.

7. Dispositif de dosage selon la revendication 6, dans lequel le fond du réservoir collecteur (3) comporte un plan oblique (19) incliné vers l'ouverture d'évacuation (17), et dans lequel l'ouverture d'entrée (5) est disposée au-dessus du plan oblique (19).

8. Dispositif de dosage selon la revendication 7, dans lequel le plan oblique (19) est directement adjacent à l'ouverture d'évacuation (17).

9. Dispositif de dosage selon l'une des revendications précédentes 1 ou 5 à 8,
dans lequel l'alimentation de matériau granulaire introduit par le biais de l'ouverture d'entrée (5) jusqu'à l'ouverture d'évacuation (17) peut être réglée au moyen d'un tiroir de fermeture (24).

10. Dispositif de dosage selon l'une des revendications précédentes, dans lequel un ou plusieurs éléments sont prévus dans la conduite de retour et/ou dans le réservoir collecteur, lesquels empêchent ou entravent un transport de matériau granulaire à partir du réservoir collecteur (3) dans le boîtier (1) par le biais de la conduite de retour (4).

11. Dispositif de dosage selon la revendication 10, dans lequel lesdits un ou plusieurs éléments comportent un clapet anti-retour (27).

12. Dispositif de dosage selon la revendication 10 ou 11,
dans lequel lesdits un ou plusieurs éléments comportent des éléments de guidage cunéiformes (32, 33) dont les pointes sont orientées dans le sens de transport (A) souhaité qui mène du boîtier (1) au réservoir collecteur (3) par le biais de la conduite de retour (4) .

13. Dispositif de dosage selon l'une des revendications précédentes, le dispositif de dosage comportant au moins un élément d'entraînement (38) monté rotatif, au moyen duquel des grains (39) du matériau granulaire qui sont mis à l'écart dans un espace de collecte (37) peuvent être accélérés et consécutivement évacués par force centrifuge hors de l'espace de collecte (37) et transportés dans la conduite de retour (4).

14. Dispositif de dosage selon la revendication 13, dans lequel ledit au moins un élément d'entraînement (38) est réalisé de telle sorte qu'il peut être dévié au moins partiellement en sens inverse à son sens de rotation.

15. Semoir comportant un dispositif de dosage selon l'une des revendications précédentes.
